# EUROPEAN PATENT SPECIFICATION

(11) **EP 4 043 917 B1**
(45) Date of publication and mention of the grant of the patent: **04.12.2024**
(21) Application number: 20883336.8
(22) Date of filing: 30.10.2020
(51) Int. Cl.: G01S 13/08, H04W 4/02, G01S 7/00, G01S 13/00, G01S 13/76, G01S 13/87, G01S 13/931, G08C 17/02, H04L 5/00

(54) **SENSING METHOD AND DEVICE**
MESSVERFAHREN UND -VORRICHTUNG
PROCÉDÉ ET DISPOSITIF DE DÉTECTION

(30) Priority: 31.10.2019 CN 201911054769
(43) Date of publication of application: 17.08.2022
(73) Proprietor: Huawei Technologies Co., Ltd., Shenzhen, Guangdong 518129 (CN)
(72) Inventor: DU, Rui, Shenzhen, Guangdong 518129 (CN); YU, Jian, Shenzhen, Guangdong 518129 (CN); LI, Yunbo, Shenzhen, Guangdong 518129 (CN); HAN, Xiao, Shenzhen, Guangdong 518129 (CN)
(74) Representative: Gill Jennings & Every LLP
(86) International application number: PCT/CN2020/125503
(87) International publication number: WO 2021/083368

(56) References cited:
- WO-A1-2017/011211
- CN-A- 101 986 724
- CN-A- 103 427 905
- CN-A- 108 700 641
- CN-A- 108 988 916
- CN-A- 110 138 526
- CN-A- 110 138 526
- CN-A- 110 149 612
- US-A1- 2013 154 872
- US-A1- 2014 093 005
- HAN TONY XIAO ET AL: "Submission Wi-Fi sensing - Follow up Authors: Name Affiliation Address Phone Email", 15 September 2019 (2019-09-15), IEEE 802.11, pages 1 - 30, XP093047723, Retrieved from the Internet <URL:https://mentor.ieee.org/802.11/dcn/19/11-19-1500-00-0wng-wi-fi-sensing-follow-up.pptx> [retrieved on 20230517]
- RUI DU ET AL: "An Overview on IEEE 802.11bf: WLAN Sensing", ARXIV.ORG, CORNELL UNIVERSITY LIBRARY, 201 OLIN LIBRARY CORNELL UNIVERSITY ITHACA, NY 14853, 11 July 2022 (2022-07-11), XP091268635
- MIYAZAKI MASAHIKO ET AL: "Initial Attempt on Outdoor Human Detection using IEEE 802.11ac WLAN Signal", 2019 IEEE SENSORS APPLICATIONS SYMPOSIUM (SAS), IEEE, 11 March 2019 (2019-03-11), pages 1 - 6, XP033545552, DOI: 10.1109/SAS.2019.8706126

## Description

### TECHNICAL FIELD

This application relates to the field of communication technologies, and in particular, to a sensing method and apparatus.

### BACKGROUND

A radar (radar) may be used in non-contact object sensing, to implement speed measurement, ranging, imaging, and other functions. During target sensing, a radar transmitter transmits electromagnetic waves, and the electromagnetic waves are reflected by a target and then received by a radar receiver. Changes of transmitted waves and reflected waves of the target are analyzed through signal processing, so that information such as a speed and a distance of the target can be solved, or the target can be detected and imaged based on related algorithms.

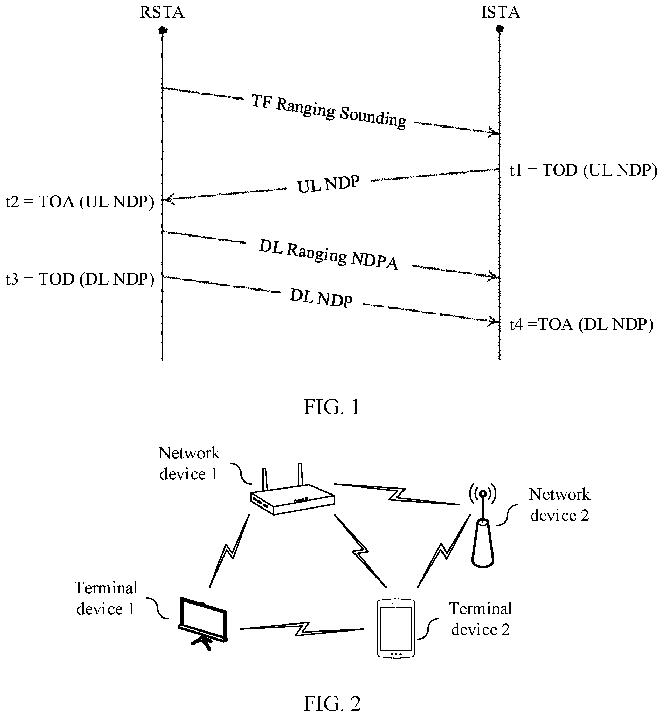

Currently, to achieve communication sensing integration, a radar technology may be applied to a wireless local area network (wireless local area network, WLAN). Widely distributed WLAN devices are used to implement sensing functions, to further implement functions such as intrusion sensing, behavior recognition, body movement/gesture recognition, fall sensing, and key vital feature signal monitoring. A radar sensing technology is introduced in the WLAN, so that existing network resources can be fully used without increasing large extra overheads. In a future densely deployed WLAN device, one access point (access point, AP) may cover a plurality of stations (stations, STAs). Therefore, the AP and the plurality of STAs may jointly sense a target. In the existing 802.11az standard, a fine timing measurement (fine timing measurement, FTM) technology is defined. The technology for performing ranging or positioning based on a time of flight of a signal has been widely applied to sensing between active devices. In the standard, the FTM defines two roles: One is an initiation station (initiation station, ISTA) of the FTM, and the other is a response station (response station, RSTA) of the FTM. This technology supports the plurality of STAs in performing FTM measurement simultaneously to locate the active devices. A specific FTM process is shown in FIG. 1. First, the ISTA establishes an FTM negotiation relationship with the RSTA, and then the RSTA transmits a ranging sounding (ranging sounding) frame (frame) to the ISTA. After receiving the sounding frame, the ISTA returns an uplink null data packet (uplink null data packet, UL NDP) frame to the RSTA, and records a transmitting time stamp t1. When receiving the UL NDP, the RSTA records a receiving time stamp t2, and returns a downlink ranging null data packet announcement (downlink ranging null data packet announcement, DL NDPA) frame to the ISTA. Then, the RSTA transmits the DL NDP frame to the ISTA at a moment t3, and records a transmitting time stamp t3. The ISTA receives the DL NDP frame and records a receiving time stamp t4. A round-trip delay ((round-trip time, RTT) ((t4-t1)-(t3-t2))) parameter is defined in the 802.11az standard and is used to measure a distance between the RSTA and the ISTA.

However, the FTM technology is mainly for sensing between devices, and it is required that both terminals of the sensing have a function of transmitting/receiving electromagnetic waves. In an actual environment, various objects need to be measured, and the FTM method cannot meet a requirement of sensing between passive devices.

US2014093005A1 discloses codebook based sounding in a Wi-Fi network, wherein an access point announces its antenna setting capability, and expects to receive codebook index feedback from a receiving station. A beacon is sent, the receiving station measures CSI and sends feedback from the index in the codebook to be sent for subsequent transmission using beamforming. WO2017011211A1 relates to unified feedback for OFDMA WLAN, disclosing a system with beamforming feedback in a data transmission system by using NDP frames for CSI training and feedback between two stations.

MIYAZAKI MASAHIKO ET AL, "Initial Attempt on Outdoor Human Detection using IEEE 802.11ac WLAN Signal", 2019 IEEE SENSORS APPLICATIONS SYMPOSIUM (SAS), IEEE, relates to outdoor human detection using IEEE 802.11ac WLAN Signal.

Han Tony Xiao ET AL: "Submission Wi-Fi sensing - Follow Up", discloses discussions for development for WLAN sensing. This document discloses a scenario in which an LOS signal, and an NLOS signal are used to measure the position of a passive target, based, e.g. in AoD, AoD and/or ToF information of the transmitting signals, and position of the stations involved.

### SUMMARY

Implementations of this application provide a sensing method and apparatus, to complete sensing of a passive target.

The invention has been defined in the independent claims. Further specific technical features have been defined in the dependent claims.

### BRIEF DESCRIPTION OF DRAWINGS

FIG. 1 is an implementation principle diagram of an FTM technology according to an implementation of this application;
FIG. 2 is a schematic diagram of an architecture of a communication system according to an implementation of this application;
FIG. 3 is a schematic diagram of a structure of a sensing apparatus according to an implementation of this application;
FIG. 4 is a schematic diagram of a structure of a sensing apparatus according to an implementation of this application;
FIG. 5 is a schematic flowchart of a sensing method according to an implementation of this application;
FIG. 6 is an example schematic diagram of some beam information according to an implementation of this application;
FIG. 7(a) to FIG. 7(e) are schematic diagrams of scenarios of a sensing method according to an implementation of this application;
FIG. 8 is a schematic time sequence diagram of an LOS assessment procedure according to an implementation of this application;
FIG. 9 is a schematic diagram of a structure of an NDPA frame according to an implementation of this application;
FIG. 10(a) and FIG. 10(b) are schematic flowcharts of a sensing method according to an implementation of this application;
FIG. 11(a) and FIG. 11(b) are schematic diagrams of a procedure of a sensing method and a structure of a first trigger frame according to an implementation of this application;
FIG. 12 is a schematic flowchart of a sensing method according to an implementation of this application;
FIG. 13(a) to FIG. 13(e) are schematic diagrams of scenarios of a sensing method according to an implementation of this application;
FIG. 14(a) and FIG. 14(b) are schematic diagrams of a procedure of a sensing method and a structure of a second trigger frame according to an implementation of this application; and
FIG. 15 is a schematic diagram of a structure of a sensing apparatus according to an implementation of this application.

### DESCRIPTION OF IMPLEMENTATIONS

To make the objectives, technical solutions, and advantages of this invention clearer, the following further describes various implementations in detail with reference to the accompanying drawings. The implementations described below are not all claimed, they are included to help understanding the context of the invention. While the description refers to various implementations, the embodiments of the invention are those that comprise at least all the features of an independent claim. Any implementation that does not fall within the scope of the claims does not form part of the invention, but rather included as an illustrative example that is useful for understanding the invention.

In the specification and accompanying drawings of this application, the terms "first", "second", and the like are intended to distinguish between different objects or distinguish between different processing of a same object, but do not describe a particular order of the objects.

"At least one" means one or more.

"A plurality of" refers to two or more than two.

"And/or" describes an association relationship between associated objects and represents that three relationships may exist. For example, A and/or B may represent the following cases: Only A exists, both A and B exist, and only B exists, where A and B may be singular or plural.

The character "/" generally indicates an "or" relationship between associated objects. For example, A/B may represent A or B.

In addition, the terms "include", "have", and any other variant thereof mentioned in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes other inherent steps or units of the process, the method, the product, or the device.

It should be noted that in implementations of this application, a word such as "example" or "for example" is used to represent an example, an example illustration, or description. Any implementation or design scheme described as an "example" or with "for example" in implementations of this application should not be explained as being more preferred or having more advantages than another implementation or design scheme. Exactly, use of the word such as "example" or "for example" is intended to present a related concept in a specific manner.

In the specification and the accompanying drawings of this application, "of (English: of)", "corresponding (English: corresponding, relevant)", and "corresponding (English: corresponding)" may sometimes be interchangeably used. It should be noted that consistent meanings are expressed when differences are not emphasized.

First, technical terms designed in implementations of this application are described.

Monostatic radar: Radars can be classified into monostatic radars, bistatic radars, and multi static radars based on whether a transmit terminal and a receive terminal are co-located. The transmit terminal and the receive terminal of the monostatic radar are co-located. In other words, a physical location of the transmit terminal is close to a physical location of the receive terminal. In some scenarios, the transmit terminal and the receive terminal share a same antenna. A structure of the monostatic radar is simple to operate, signals are from a same source, and it is easy to realize synchronous transmitting and receiving. When the monostatic radar does not have a full-duplex capability, a switch is used to switch a transceiver circuit to perform sensing. A sensing blind zone is generated during transmitting/receiving switching, and a target with a short distance cannot be better detected.

Bistatic/Multistatic Radar: A transmitter and a receiver are physically separated, or physically far apart. Theoretically, this type of radar has no sensing blind zone and can continuously detect a target. But it is not easy for this type of radar to realize synchronous transmitting and receiving.

A method in implementations of this application is applied to a joint sensing process between a plurality of nodes. FIG. 2 shows an architecture of a communication system to which an implementation of this application is applicable. The communication system may be a WLAN system or another system, for example, a V2X communication system, a device-to-device (device-to-device, D2D) communication system, an Internet of Vehicles communication system, a long term evolution (long term evolution, LTE) system, an LTE frequency division duplex (frequency division duplex, FDD) system, an LTE time division duplex (time division duplex, TDD) system, a worldwide interoperability for microwave access (worldwide interoperability for microwave access, WiMAX) communication system, a 5th generation (5th generation, 5G) mobile communication system such as an NR system, or a future communication system such as a 6G system. This is not limited in implementations of this application.

Some scenarios in implementations of this application are described by using a scenario in a Wi-Fi communication system shown in FIG. 2 as an example. It should be noted that the solutions in implementations of this application may also be applied to another mobile communication system, and a corresponding name may also be replaced with a name of a corresponding function in the another mobile communication system.

To better understand implementations of this application, the following describes in detail a communication system to which implementations of this application are applicable by using a communication system shown in FIG. 2 as an example.

The communication system includes at least one network device (two network devices are shown as an example in FIG. 2) and/or at least one terminal device (two terminal devices are shown as an example in FIG. 2).

In this implementation of this application, the network device is a device that is located on a network side of the communication system and has a wireless transceiver function, or a chip or a chip system that may be disposed in the device. The network device includes but is not limited to an access point (access point, AP) in a wireless fidelity (wireless fidelity, Wi-Fi) system, such as a home gateway, a router, a server, a switch, or a bridge. The network device may alternatively be an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless relay node, a wireless backhaul node, or a transmission point (transmission and reception point, TRP or transmission point, TP). The network device may alternatively be a gNB in a 5G system, for example, a new radio (new radio, NR) system, a transmission point (TRP or TP), one antenna panel or a group of antenna panels (including a plurality of antenna panels) of a base station in the 5G system, or a network node that constitutes the gNB or the transmission point, such as a baseband unit (BBU), a distributed unit (distributed unit, DU), or a road side unit (road side unit, RSU) having a base station function.

The terminal device is a terminal that accesses the communication system shown in FIG. 2 and has a wireless transceiver function, or a chip or a chip system that may be disposed in the terminal. The terminal device may also be referred to as a user apparatus, an access terminal, a subscriber unit, a subscriber station, a mobile station, a mobile console, a remote station, a remote terminal, a mobile device, a user terminal, a terminal, a wireless communication device, a user agent or a user apparatus. The terminal device in implementations of this application may be a mobile phone (mobile phone), a tablet (Pad), a computer having a wireless transceiver function, a virtual reality (Virtual Reality, VR) terminal device, an augmented reality (Augmented Reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, an RSU having a terminal function, or the like. The terminal device in this application may alternatively be a vehicle-mounted module, a vehicle-mounted component, a vehicle-mounted chip, or a vehicle-mounted unit with which a vehicle is equipped as one or more components or units. By using the vehicle-mounted module, the vehicle-mounted component, the vehicle-mounted chip, or the vehicle-mounted unit with which the vehicle is equipped, the vehicle can implement the sensing method provided in this application. Generally, a mobile phone may be used as a station to access an AP.

It should be noted that the terminal device, such as a mobile phone, may alternatively be used as an AP. For example, the mobile phone can enable another mobile phone to access a network through a hotspot. The network device, for example, a router, may also be used as a station. The router accesses another uplink network, so that the mobile phone obtains an uplink network service through the router.

It should be noted that the sensing method provided in implementations of this application may be applied between any two nodes shown in FIG. 2, for example, between terminal devices, between network devices, or between a terminal device and a network device.

It should be understood that FIG. 2 is only a simplified schematic diagram that is used as an example for ease of understanding. The communication system may further include another network device and/or terminal device that are/is not shown in FIG. 2.

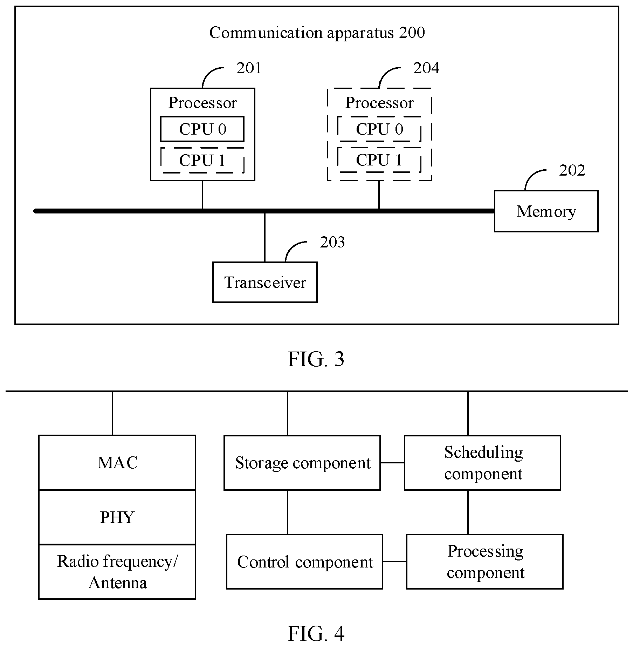

FIG. 3 is a schematic diagram of a structure of a communication apparatus 200 to which a sensing method according to an implementation of this application is applicable. The communication apparatus 200 may be a terminal device, or may be a chip used in a terminal device, or another component having a terminal function. As shown in FIG. 3, the communication apparatus 200 may include at least one processor 201, a memory 202, and a transceiver 203. There is a signal connection between the at least one processor 201, the memory 202, and the transceiver 203. For example, the processor 201, the memory 202, and the transceiver 203 may be connected through a bus.

The following describes each composition component of the communication apparatus 200 in detail with reference to FIG. 3.

The processor 201 is a control center of the communication apparatus 200, and may be one processor or may be a collective term of a plurality of processing elements. For example, the processor 201 may be one or more central processing units (central processing units, CPUs), or an application-specific integrated circuit (application-specific integrated circuit, ASIC), or may be configured as one or more integrated circuits implementing implementations of this application, for example, one or more microprocessors (digital signal processors, DSPs) or one or more field programmable gate arrays (field programmable gate arrays, FPGAs).

The processor 201 may execute various functions of the communication apparatus 200 by running or executing a software program stored in the memory 202 and invoking data stored in the memory 202.

During specific implementation, in an implementation, the processor 201 may include one or more CPUs, for example, a CPU 0 and a CPU 1 that are shown in FIG. 3.

During specific implementation, in an implementation, the communication apparatus 200 may alternatively include a plurality of processors, for example, the processor 201 and a processor 204 that are shown in FIG. 3. Each of the processors may be a single-core processor (single-CPU) or a multi-core processor (multi-CPU). The processor herein may be one or more communication devices, circuits, and/or processing cores configured to process data (for example, computer program instructions).

The memory 202 may be a read-only memory (read-only memory, ROM) or another type of static storage communication device that can store static information and instructions; or a random access memory (random access memory, RAM) or another type of dynamic storage communication device that can store information and instructions. The memory 202 may alternatively be an electrically erasable programmable read-only memory (electrically erasable programmable read-only memory, EEPROM), a compact disc read-only memory (compact disc read-only memory, CD-ROM) or another compact disc storage, optical disc storage (including a compact disc, a laser disc, an optical disc, a digital versatile disc, a Blu-ray disc, or the like), a magnetic disk storage medium or another magnetic storage communication device, or any other medium that can be used to carry or store expected program code in a form of instructions or a data structure and that is accessible by a computer, but is not limited thereto. The memory 202 may exist independently, or may be integrated with the processor 201.

The memory 202 is configured to store a software program used to perform the solutions of this application, and the processor 201 controls execution of the software program. For a specific implementation, refer to the following method implementations. Details are not described herein.

The transceiver 203 is configured to communicate with another communication apparatus. Certainly, the transceiver 203 may be further configured to communicate with a communication network. The transceiver 203 may include a receiving unit to implement a receiving function, and a transmitting unit to implement a transmitting function.

It should be noted that the structure of the communication apparatus 200 shown in FIG. 3 does not constitute a limitation on the communication apparatus. An actual communication apparatus may include more or fewer components than those shown in the figure, or combine some components, or have different component arrangement.

FIG. 4 is another schematic diagram of a structure of a communication apparatus according to an implementation of this application. The apparatus includes a radio frequency component and an antenna, so that the apparatus communicates with another apparatus through the radio frequency component and the antenna. The apparatus may further include a component for implementing a function of a media access control (media access control, MAC) layer and a component for implementing a function of a physical (physical, PHY) layer. The apparatus may further include a storage component, for example, the memory shown in FIG. 3. The apparatus may further include a scheduling component, configured to schedule the apparatus or another apparatus to implement some functions, for example, to schedule the another apparatus to transmit information. The apparatus may further include a control component and a processing component. The control component is configured to control an action of the apparatus, and the processing component is configured to process some signals. In a possible implementation, the scheduling component, the control component, and the processing component may be integrated together, or disposed separately. In a possible implementation, the storage component may be integrated with one or more components such as the scheduling component, or disposed separately.

As described above, in the conventional technology, although a WLAN device implements sensing by using an FTM technology, such sensing is usually sensing between active devices, and sensing of a passive object (for example, a person or a tree) is not implemented. In addition, the FTM technology is based on a time of flight of a signal. Therefore, a time of a receive terminal and a time of a transmit terminal usually need to be synchronized. When the time of the receive terminal and the time of the transmit terminal are not synchronized, a measurement effect is usually poor.

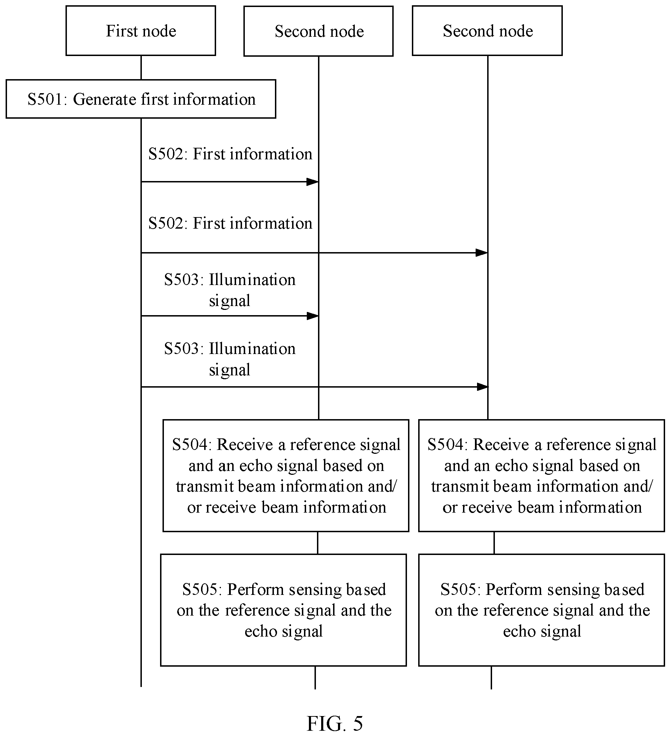

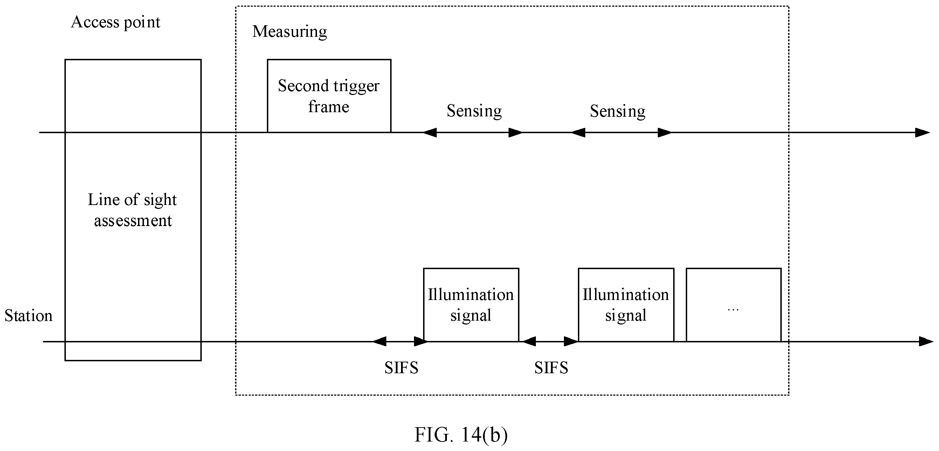

To resolve the foregoing technical problem, implementations of this application provide a sensing method. The following specifically describes the sensing method provided in implementations of this application with reference to FIG. 5 to FIG. 14(a) and FIG. 14(b).

FIG. 5 is a schematic flowchart 1 of a sensing method according to an implementation of this application. The sensing method is applicable to joint sensing between the plurality of nodes shown in FIG. 2.

As shown in FIG. 5, the sensing method includes the following steps.

S501: A first node generates one or more pieces of first information.

It should be noted that in the procedure shown in FIG. 5, the technical solution in this implementation of this application is described by using an example in which the first node is an AP, the first node is used as an illumination terminal, a second node is a STA, and the second node is used as a sensing terminal.

In this implementation of this application, a WLAN device may play an illumination role, or may play a sensing role. A device playing the illuminates role may be the illumination terminal, and a device playing the sensing role may be the sensing terminal. The illumination terminal refers to a terminal that transmits an illumination signal (illumination signal). A part of illumination signals (referred to as illumination signals for illuminating a target, target illumination signals) can reach the target. An echo signal is formed after the illumination signals are reflected by the target. A part of the illumination signals can reach the sensing terminal through an LOS. The part of illumination signals (referred to as direct illumination signals) may be used as a reference signal of the sensing terminal. The sensing terminal refers to a terminal that receives the echo signal reflected by the target and that the reference signal of the illumination terminal can reach through the LOS. The sensing terminal may determine a motion feature, a location, a speed, and the like of the target based on a relationship between the echo signal of the target and the reference signal, for example, an amplitude deviation or a phase deviation.

Generally, a WLAN device with a high frequency (which may be 60 GHz and complies with the 802.11ad/ay standard) has a good beam capability, and may form a plurality of (≥ 1) beams. Based on this, in implementations of this application, a dual-channel architecture in a passive radar is introduced into a sensing procedure of the WLAN device for the first time. Specifically, the sensing terminal forms dual channels, and the dual channels respectively correspond to the reference signal and the echo signal. A WLAN receiving device receives the reference signal through one channel, and the channel may be referred to as a reference channel. The WLAN receiving device receives the echo signal through the other channel, and the channel may be referred to as a monitoring channel. Further, the illumination terminal may form a transmit beam that is along an LOS of a transmit terminal and a receive terminal that point to a direction of the sensing terminal, so that a direct illumination signal is transmitted by using the transmit beam. Correspondingly, the sensing terminal may form a receive beam that is along the LOS and that points to the illumination terminal. In this way, the sensing terminal can receive the reference signal on the reference channel by using the receive beam, thereby improving a transmit gain. In addition, because the target may move, the illumination terminal may alternatively form a transmit beam at a specific initial scanning angle, and the transmit beam scans in space along a specific scanning direction, to transmit, by using the transmit beam, a target illumination signal with a variable direction, to track the moving target. Echo signals in different directions of the moving target are formed. Correspondingly, the sensing terminal forms a receive beam. In this way, the sensing terminal can scan in space on the monitoring channel by using the receive beam, to receive the echo signal. Certainly, the sensing terminal may alternately receive the echo signal omnidirectionally on the monitoring channel.

The first information is used to indicate the receive beam of the second node, so that the second node adjusts the receive beam used to receive the echo signal and/or the reference signal. For example, the second node adjusts a receive beam direction, that is, perform beam steering, to efficiently receive the echo signal and the reference signal. First information for a second node includes transmit beam information of the first node and/or receive beam information of the second node.

The transmit beam information includes the following: a quantity of transmit beams, a beam angle of the transmit beam used to transmit the illumination signal, an initial scanning angle of the transmit beam used to transmit the illumination signal, and a scanning direction of the transmit beam used to transmit the illumination signal; and/or
the receive beam information includes one or a combination of the following: a quantity of receive beams, a beam angle of the receive beam used to receive the reference signal, an initial scanning angle of the receive beam used to receive the echo signal, and a scanning direction of the receive beam used to receive the echo signal. The beam angle of the receive beam used to receive the reference signal is along an LOS between the first node and the second node and points to the first node.

The transmit beam information may further include others, for example, include a transmit beam width and/or transmit beam power. The receive beam information may further include a receive beam width and/or receive beam power. Specific content included in the transmit beam information and/or specific content included in the receive beam information are/is not limited in implementations of this application.

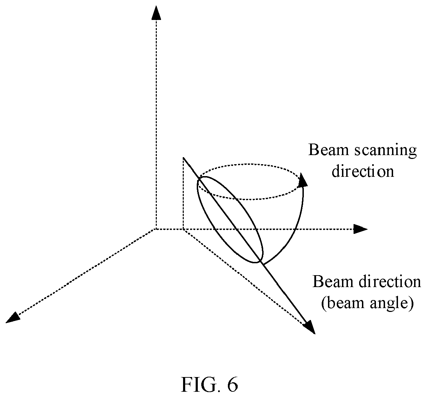

As shown in FIG. 6, in implementations of this application, the beam angle is a concept in three-dimensional space, and may also be referred to as a beam direction. Similarly, the initial scanning angle may also be referred to as an initial scanning direction.

S502: The first node respectively transmits the one or more pieces of first information to one or more second nodes.

Correspondingly, the second node receives the first information from the first node.

In a possible implementation, that the first node transmits the first information to the second node may be specifically implemented as: The first node transmits an NDPA frame to the second node, where the NDPA frame includes (or carries) the first information.

Correspondingly, that the second node receives the first information from the first node may be specifically implemented as: The second node receives the NDPA frame from the first node.

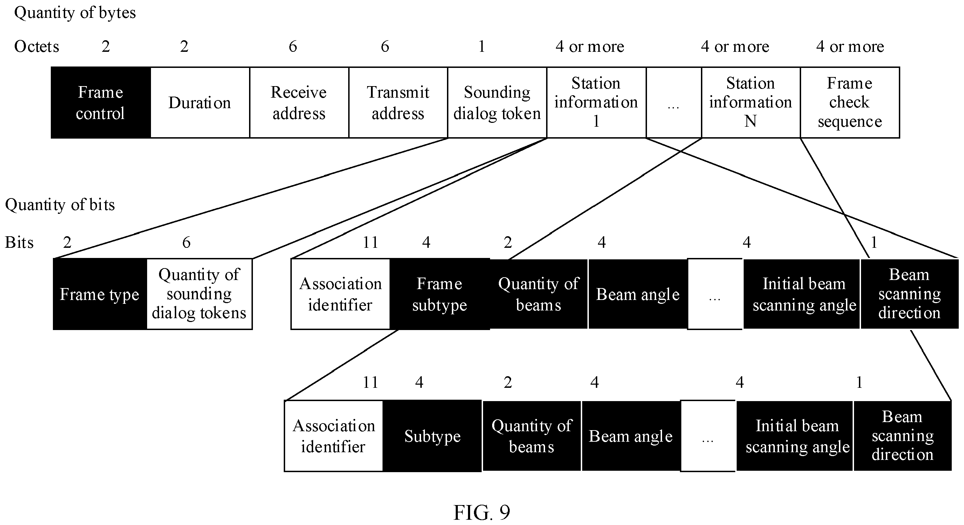

In this implementation of this application, a structure of the NDPA frame is improved, so that the first information is carried in the NDPA frame. Specifically, a format of the NDPA frame is shown in FIG. 9.

The NDPA frame includes but is not limited to one or a combination of the following: a frame control (frame control) field, a duration (duration) field, a receive address (receive address, RA), a transmit address (transmit address), a sounding dialog token (sounding dialog token) field, one or more station information (STA information) fields, and a frame check sequence (frame check sequence, FCS) field as shown in FIG. 9. Fields filled in black are new or improved fields in implementations of this application. The following describes the new or improved fields and corresponding field values. As shown in Table 1, the fields and their meanings are as follows.

**Table 1**

| Field name | Meaning |
|---|---|
| Frame Control (frame control) | This field includes some frame control information of the NDPA frame, including type (Type) information and subtype (Subtype) information of the NDPA frame. The frame type includes a sensing (sensing) type, where in an implementation, the Type may be used to indicate that the NDPA frame is an NDPA frame of the sensing type (referred to as a sensing NDPA frame in implementations of this application), that is, an NDPA frame used for sensing, detection, positioning, and ranging; |
| | and/or the frame subtype includes a sensing subtype, where in an implementation, the Subtype may be used to indicate that the NDPA frame is a sensing NDPA frame. |
| NDPA Type (frame type) | A field value of this field is used to indicate type (Type) information of the NDPA frame, and is used to distinguish whether the NDPA frame is a VHT (Very High Throughput, that is, the 802.11ac standard) NDPA frame, an HE (High Efficiency, HE, that is, the 802.11ax standard) NDPA frame, a ranging (Ranging) NDPA used for positioning, or a sensing NDPA. The field value has 2 bits in total, and specifically indicates as follows: |
| | 00: VHT NDPA frame |
| | 01: HE NDPA frame |
| | 10: Ranging NDPA |
| | 11: Sensing NDPA |
| | Alternatively, 00 may indicate the sensing NDPA, 01 indicates the VHT NDPA frame, 10 indicates the HE NDPA frame, and 11 indicates the Ranging NDPA. Which two bits are specifically used to indicate the frame type is not limited in implementations of this application. |
| AID, association identifier (association identifier) | When a field value of the AID field is set to a preset special AID, for example, 2045, it indicates that a subsequent field of the AID field in station information may be reused. For example, a beam-related field (a quantity of beams, a beam angle, and the like) subsequent to the AID field is reused, to indicate information about the transmit beam and/or the receive beam. |
| | When the field value of the AID field is not the preset special AID, the AID field is used by an AP to identify an associated STA, and the AID is used to uniquely identify a STA in this basic service set (basic service set, BSS). |
| NDPA subtype (NDPA frame subtype) | This field is included in the station information. A field value of this field is used to indicate subtype information of the sensing NDPA frame, and a subtype may be sensing NDPA. |
| | The field may be further used to indicate a subfunction. For example, the field may be used to indicate sensing of dual channels. The dual channels respectively correspond to a reference signal and an echo signal. |
| | 0000: Sensing of dual channels |
| | 0001-1111: Reserved |
| Beam Number (a quantity of beams at an illumination terminal (AP)) | This field indicates a quantity of transmit beams. For example, the AP performs omnidirectional transmission (corresponding to in FIG. 7(a)), and it indicates that no beam is generated, that is, a quantity of beams is 0. In FIG. 7(b), FIG. 7(c), FIG. 7(d), or FIG. 7(e), it indicates that the AP generates two beams. |
| | This field may alternatively be defaulted. |
| Beam angle (an angle of a transmit beam) | This field indicates the angle of the transmit beam. For example, in FIG. 7(b), FIG. 7(c), FIG. 7(d), or FIG. 7(e), this field indicates an angle of a transmit beam 3. |
| Beam angle (an angle of the | This field indicates an initial scanning angle of the transmit beam. For example, |
| transmit beam) | in FIG. 7(b), FIG. 7(c), FIG. 7(d), or FIG. 7(e), this field indicates an initial scanning angle of a beam 4. |
| Beam steering direction (a scanning direction of the transmit beam) | This field indicates the scanning direction of the transmit beam. For example, in FIG. 7(b), FIG. 7(c), FIG. 7(d), or FIG. 7(e), this field indicates a scanning direction of the beam 4. |
| Beam number (a quantity of receive beams) | This field indicates a quantity of receive beams generated by a sensing terminal (STA). For example, in FIG. 7(c) or FIG. 7(d), this field indicates that the STA generates one beam. In FIG. 7(b), this field indicates that the STA generates two beams. In FIG. 7(e), this field indicates the STA does not generate a beam. |
| Beam angle (an angle of a receive beam) | This field indicates the angle of the receive beam generated by the sensing terminal (STA). For example, in FIG. 7(a), FIG. 7(b), or FIG. 7(c), this field indicates an angle of a beam 1. |
| Beam angle (an angle of a receive beam) | This field indicates the angle of the receive beam generated by the sensing terminal (STA). For example, in FIG. 7(a), FIG. 7(b), or FIG. 7(d), this field indicates an initial scanning angle of a beam 2. |
| Beam steering direction (a scanning direction of the receive beam) | This field indicates the scanning direction of the receive beam generated by the sensing terminal (STA). For example, in FIG. 7(a), FIG. 7(b), or FIG. 7(d), this field indicates a scanning direction of the beam 2. |
| | Specifically, one bit may be used to indicate the scanning direction. |
| | 0: Clockwise, clockwise |
| | 1: Anticlockwise, anticlockwise |

According to Table 1, in implementations of this application, it may indicate in different manners that the NDPA frame is a sensing NDPA frame. Frame control information in a frame control field may be used to indicate whether the NDPA frame is a sensing NDPA frame. In other words, frame type information (indicating whether the frame is a sensing NDPA frame) is included in the frame control information of the frame control field. In this case, a frame type field shown in FIG. 9 may be defaulted, or may not be defaulted. Alternatively, a field value of the frame type field is used to indicate whether the NDPA frame is a sensing NDPA frame. In other words, the frame type information is included in a field value of a frame type field of sounding dialog token information. Alternatively, a field value of a frame subtype field is used to indicate whether the NDPA frame is a sensing NDPA frame.

S503: The first node transmits the illumination signal.

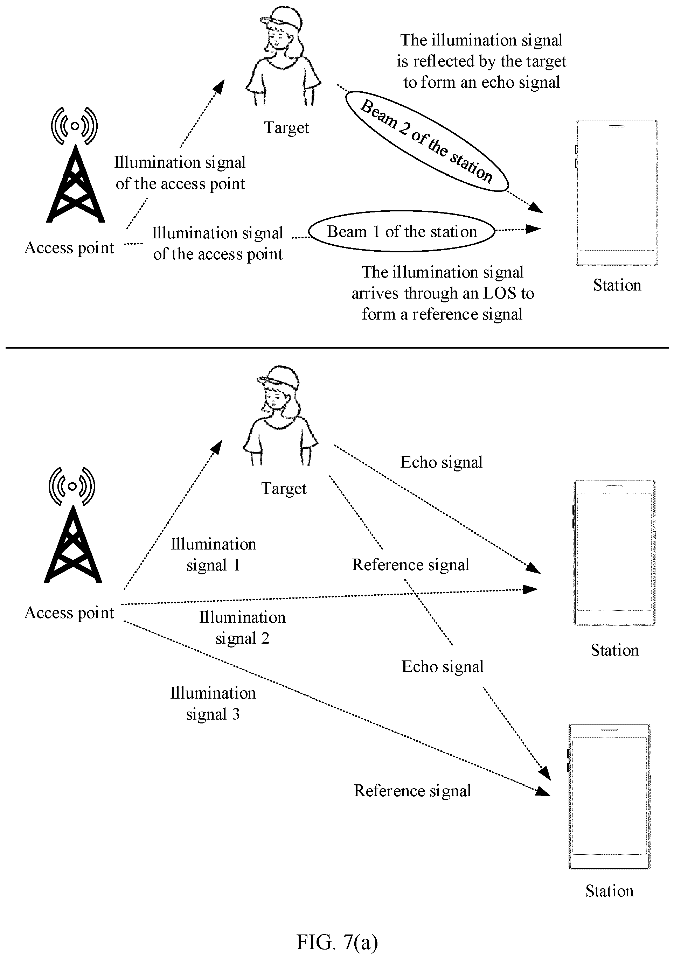

The first node transmits a plurality of illumination signals. Refer to FIG. 7(a). A part of the illumination signals (such as an illumination signal 1) can form an echo signal after being reflected by the target, and a part of the illumination signals (such as an illumination signal 2 and an illumination signal 3) can reach one or more second nodes through an LOS, and are respectively used as reference signals of the one or more second nodes.

S504: The second node receives the reference signal and the echo signal based on the transmit beam information and/or the receive beam information.

For example, the transmit beam, the receive beam, and the corresponding first information include but are not limited to the following cases.

Case 1: Refer to FIG. 7(a). The AP does not generate a transmit beam, that is, the AP transmits each illumination signal in an omnidirectional manner. In this case, the first information includes the receive beam information, and is used to indicate the receive beam of the second node. The first information may indicate that there may be two receive beams of the second node, indicate an angle of one receive beam, and indicate an initial scanning angle and a scanning direction of the other receive beam. In this way, as shown in FIG. 7(a), the second node, that is, a station, forms a receive beam 1 and a receive beam 2 based on the receive beam information indicated by the first information. In this way, after the AP transmits the illumination signal, the station may receive the reference signal by using the receive beam 1 whose angle is indicated by the first information, and scan in space by using the receive beam 2 at the initial scanning angle indicated by the first information and in the scanning direction indicated by the first information, to receive the echo signal. Certainly, there may alternatively be one receive beam (not shown in the figure) of the second node. For example, the station forms only the receive beam 1 through one or more antennas, receives the reference signal by using the receive beam 1, and receives the echo signal through the one or more antennas in the omnidirectional manner. Alternatively, the station forms only the receive beam 2, scans in space to receive the echo signal, and receives the reference signal in the omnidirectional manner.

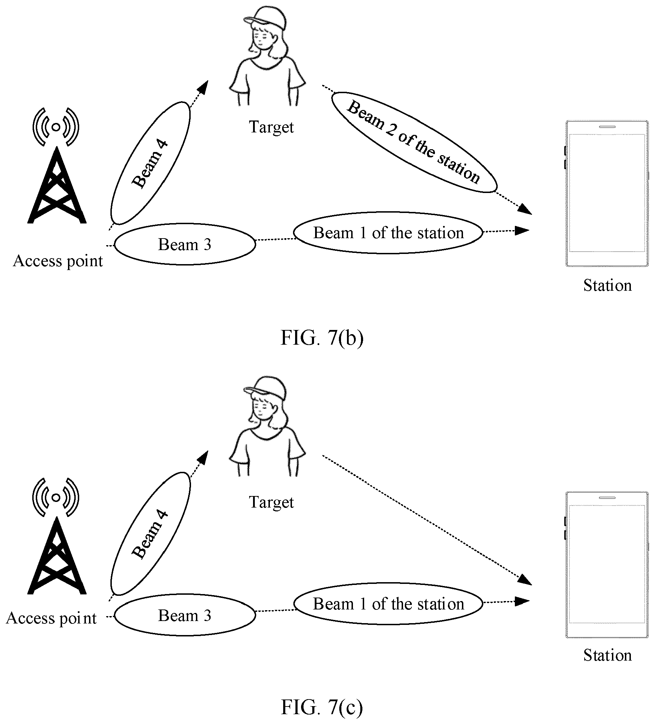

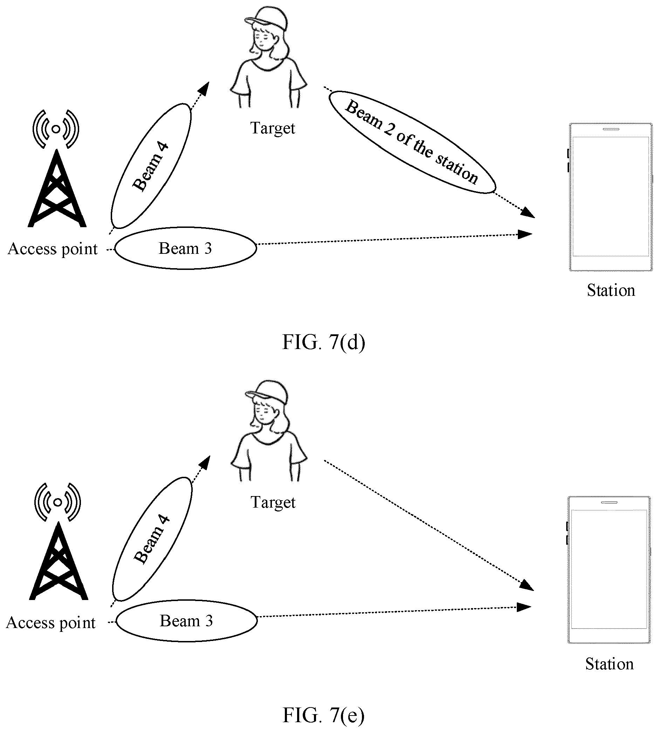

Case 2: Refer to FIG. 7(b), FIG. 7(c), or FIG. 7(d). The AP generates two beams, that is, a transmit beam 3 and a transmit beam 4, and the AP transmits an illumination signal by using each of the transmit beam 3 and the transmit beam 4.

In a possible implementation, the first information includes the transmit beam information of the first node, and the transmit beam includes a first transmit beam and a second transmit beam that are used to transmit the illumination signal. The receiving a reference signal based on the transmit beam information includes: receiving the reference signal by using a beam corresponding to the first transmit beam, or receiving the reference signal omnidirectionally in space; and/or the receiving an echo signal based on the transmit beam information includes: receiving the echo signal by using a beam corresponding to the second transmit beam or receive the echo signal omnidirectionally in space. In other words, the first node may indicate the transmit beam information in the first information, so that the second node determines one or two receive beams based on the transmit beam information, and receives the reference signal and/or the echo signal by using the one or two receive beams. For example, as shown in FIG. 7(b), FIG. 7(c), or FIG. 7(d), the first transmit beam is the beam 3, the second transmit beam is the beam 4, and the first information sent by the AP may include information about the beam 3 and information about the beam 4, for example, the beam angle of the beam 3, and the initial scanning angle and the scanning direction of the beam 4. In this way, the station may determine the receive beam information based on the information about the beam 3 and the information about the beam 4, to adjust the receive beam. For example, refer to FIG. 7(b), the station determines that two receive beams need to be formed, that is, the receive beam 1 and the receive beam 2 need to be formed. The receive beam 1 is a receive beam corresponding to the transmit beam 3, and the receive beam 2 is a receive beam corresponding to the transmit beam 4. An angle of the receive beam 1 may be determined by the station based on the angle of the beam 3. An initial scanning angle and a scanning direction of the receive beam 2 may be determined by the station based on the initial scanning angle and the scanning direction of the beam 4. In this way, the station may receive the reference signal by using the receive beam 1, and receive the echo signal by using the receive beam 2. Certainly, the station may alternatively determine, based on the transmit beam information, that one receive beam needs to be formed, for example, the receive beam 1 shown in FIG. 7(c) needs to be formed. In this way, the station may receive the reference signal by using the receive beam 1, and receive the echo signal omnidirectionally in space. Alternatively, the station determines that the receive beam 2 shown in FIG. 7(d) needs to be formed. In this way, the station receives the echo signal by using the receive beam 2, and receives the reference signal omnidirectionally in space. Alternatively, the station determines not to form a beam. As shown in FIG. 7(e), the STA receives illumination signals omnidirectionally in space, including a direct signal from the AP and an echo signal from the target. Optionally, the STA first needs to demodulate and re-modulate the received direct signal, to reconstruct a pure reference signal. That is, the reference signal mentioned in this specification may be obtained by performing some processing on the direct signal. Then, the STA performs subsequent sensing processing based on the received echo signal.

In a possible implementation, the first information includes the receive beam information of the second node, and the receive beam includes a first receive beam used to receive the reference signal and/or a second receive beam used to receive the echo signal. In other words, the first node indicates the receive beam information by using the first information. In this way, the second node does not need to determine the receive beam. There may be one indicated receive beam. The receive beam is used to receive the reference signal, or is used to receive the echo signal. Alternatively, there may be two indicated receive beams. One receive beam is used to receive the reference signal, and the other receive beam is used to receive the echo signal. In this way, the receiving a reference signal based on the receive beam information may be specifically implemented as: receiving the reference signal by using the first receive beam, or receiving the reference signal omnidirectionally in space; and/or the receiving an echo signal based on the receive beam information may be specifically implemented as: receiving the echo signal by using the second receive beam, or receiving the echo signal omnidirectionally in space. For example, as shown in FIG. 7(b), FIG. 7(c), or FIG. 7(d), the first information sent by the AP may include information about the beam 1 and/or the beam 2, for example, the beam angle of the beam 1, and the initial scanning angle and the scanning direction of the beam 2. In this way, the station may directly form a qualified receive beam based on an indication of the AP, and does not need to determine a parameter such as an angle of the receive beam, to accurately receive the echo signal and/or the reference signal on the receive beam. It can be learned that, because the station does not need to determine the parameter such as the angle of the receive beam, implementation complexity of the station can be reduced. Herein, there may be one receive beam indicated by the AP, for example, the beam 1 or the beam 2, or there may be two receive beams indicated by the AP.

S505: The second node performs sensing based on the reference signal and the echo signal.

Specifically, the second node may implement sensing measurement such as a speed and a distance of the target by analyzing an amplitude deviation and a phase deviation between the reference signal and the echo signal of the target. For a specific implementation procedure of sensing by analyzing the reference signal and the echo signal of the target, refer to a radar-related technology in the conventional technology, and details are not described herein. Optionally, the second node further needs to perform steps such as interference cancellation, matched filtering, and coherence accumulation, to assist in implementing target sensing. For specific implementations of interference cancellation, matched filtering, and coherent accumulation, refer to the conventional technology, and details are not described herein.

According to the sensing method provided in this implementation of this application, the second node receives the first information from the first node, where the first information includes the transmit beam information of the first node and/or the receive beam information of the second node. In this way, the second node receives the reference signal and the echo signal based on the transmit beam information and/or the receive beam information, and performs sensing based on the reference signal and the echo signal. In comparison with that sensing of a passive target cannot be implemented in the conventional technology, according to the sensing solution in this implementation of this application, because the first node may indicate, by using the first information, the second node to form a corresponding receive beam, the second node receives the echo signal and/or the reference signal by using the receive beam, to implement accurate ranging of the passive target. Because the receive beam is usually aligned with a transmit beam, a receive gain can be improved. In addition, in this solution, a target is not sensed based on a time parameter. Therefore, time synchronization between a receive terminal and a transmit terminal does not need to be performed, thereby reducing implementation complexity of the transmit terminal and the receive terminal.

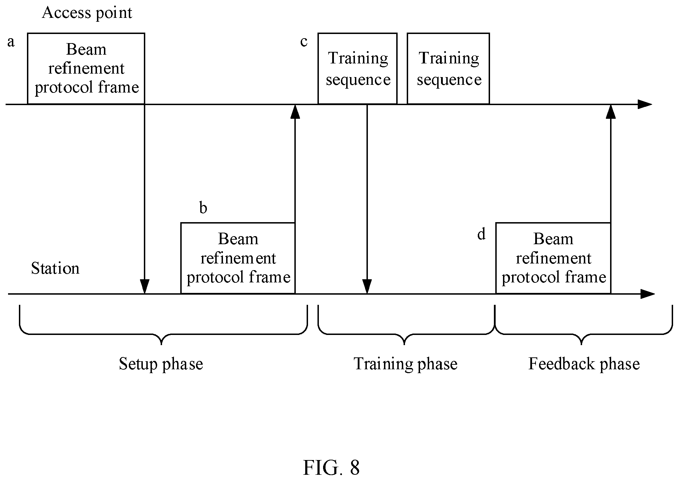

S501 to S505 may be referred to as a procedure in which the first node interacts with the second node to perform measuring (measuring). In some implementations, before S501, the first node and the second node may further interact with each other, to determine whether there is an LOS in a current communication link, to perform subsequent LOS communication. Specifically, refer to FIG. 8. An LOS assessment (LOS assessment) procedure includes the following steps.
a: In a setup phase (setup phase), an AP transmits a beam refinement protocol (beam refinement protocol, BRP) frame to a STA.
b: In the setup phase (setup phase), the STA returns a BRP frame to the AP after a short interframe space (short interframe space, SIFS) from a moment at which the AP completes transmitting the BRP frame.
   It is easy to understand that after receiving the BRP frame from the AP, the STA first returns the BRP frame to the AP, to determine that the STA needs to participate in a beam refinement procedure initiated by the AP.
c: In a training phase (training phase), the AP transmits a training sequence in different antenna settings through a transmit antenna.

Correspondingly, the STA receives the training sequence, and adjusts an antenna setting of a receive antenna.

In a possible implementation, the AP transmits a physical layer convergence protocol data unit (physical layer convergence protocol data unit, PPDU), where the PPDU includes one or more training (training, TRN) sequences.

Each training sequence is associated with a setting of an antenna that transmits the training sequence. The setting of the antenna includes but is not limited to an antenna weight vector (antenna weight vector, AWV) and a polarization direction. The training sequence may be, for example, but is not limited to, an orthogonal sequence, a Golay complementary sequence, or a Zadoff-Chu sequence. Optionally, the training sequence may further include at least one of a cyclic prefix and a cyclic suffix, to adjust any tolerable timing error caused by a channel and hardware.

For example, a same training sequence is sent in a plurality of training slots (slots), but antenna settings associated with all training sequences are different. To be specific, each time an AWV and/or a polarization direction of an antenna are adjusted, the AP transmits one training sequence based on an adjusted AWV and/or in an adjusted polarization direction.

Generally, the AP transmits the training sequence to the STA in a specific polarization direction. If the training sequence arrives at the STA through an LOS, receiving energy for receiving the training sequence by the STA in the polarization direction should be greater than a threshold. If the training sequence arrives at the STA through a non-LOS, that is, the training sequence arrives at the STA after being reflected by an obstacle or the like, a part of energy is lost due to reflection, and consequently, receiving energy of the STA in the polarization direction is reduced. Based on this principle, the STA receives the training sequence. When receiving energy of the STA in a polarization direction is greater than a preset threshold, it indicates that the training sequence arrives at the STA through the LOS. Therefore, the STA can determine a setting of the receive antenna when the LOS is used, for example, an AWV of the receive antenna.

d: In a feedback (feedback) phase, the STA feeds back the BRP frame to the AP.

The STA can notify the AP of related information about the LOS. In this way, the AP can also determine a setting of the transmit antenna when the LOS is used, for example, an AWV of the transmit antenna. Further, reference for an antenna setting is provided for subsequent communication between the STA and the AP through the LOS.

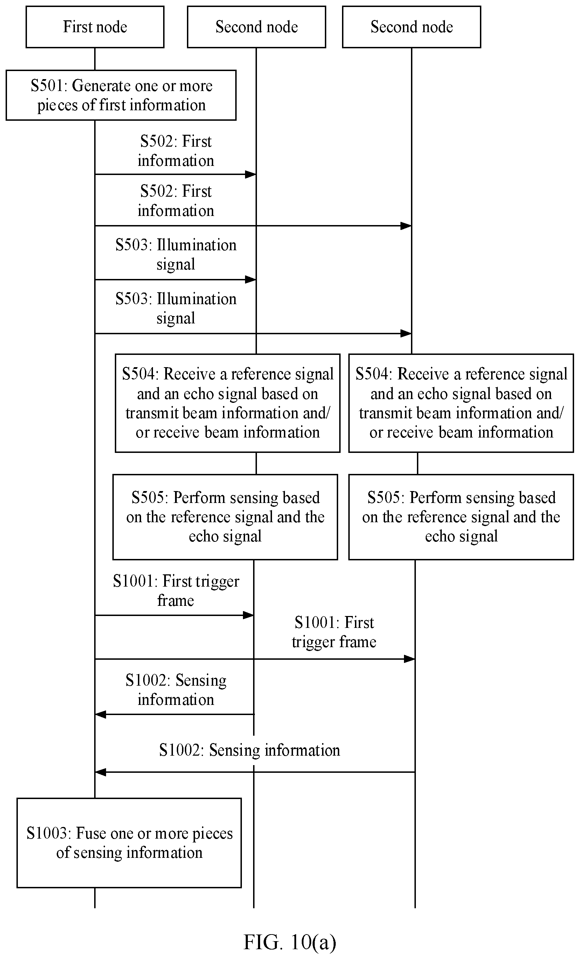

In some implementations, some interaction may be further performed between an illumination terminal (AP) and a sensing terminal (STA), to trigger one or more STAs to feed back sensing information. Specifically, refer to FIG. 10(a). In a feedback (feedback) procedure, a signaling procedure between the AP and the STA includes the following steps S1001 to S1003.

S 1001: A first node transmits a first trigger (trigger) frame to one or more second nodes.

Correspondingly, the second node receives the first trigger frame from the first node.

The first trigger frame is used to trigger the second node to feed back sensing information.

Optionally, the first trigger frame includes feedback type information, the feedback type information is used to indicate a type of the sensing information, and the type of the sensing information includes one or a combination of the following: raw information, a sensing result of the raw information, and a signal processing result of the raw information. When the first trigger frame does not include the feedback type information, that is, the feedback type information is defaulted, the second node may feed back sensing information of a default type. The sensing information of the default type may be one or a combination of: the raw information, the sensing result of the raw information, and the signal processing result of the raw information.

Optionally, the first trigger frame further includes one or a combination of the following: subtype information of the first trigger frame and type information of the first trigger frame. A subtype of the first trigger frame includes triggering the second node to feed back the sensing information. A type of the first trigger frame includes sensing.

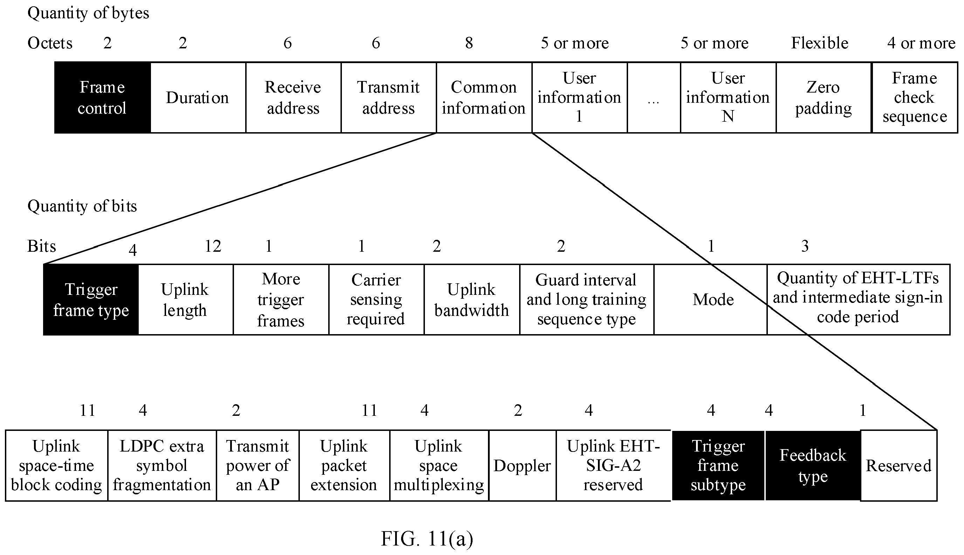

The first trigger frame includes but is not limited to one or more fields shown in FIG. 11(a). Fields filled in black are new or improved fields in implementations of this application. Meanings of the new or improved fields are mainly explained below with reference to Table 2. For specific explanations of other fields, refer to the conventional technology. Details are not described herein.

**Table 2**

| Field name | Meaning |
|---|---|
| Trigger type (trigger frame type) | A new trigger frame, that is, a trigger frame used for implementing functions such as detection, sensing, and positioning, is added to the trigger frame type, and is referred to as a sensing trigger in implementations of this application. A field value of this field is used to indicate type information of the trigger frame. |
| | Trigger frame types include but are not limited to the following: |
| | 0000: Basic (Basic) |
| | 0001: Beamforming report poll (Beamforming Report Poll, BFRP) |
| | 0010: Multi-user block acknowledgement request (multi-user blockackreq, MU-BAR) |
| | 0011: Multi-user request to send (multi-user request to send, MU-RTS) |
| | 0100: Buffer status report poll (Buffer Status Report Poll, BSRP) |
| | 0101: Groupcast with retries, multi-user acknowledgement request (Groupcast with Retries, Multi-User BlockAckReq, GCR MU-BAR) |
| | 0110: Bandwidth query report poll (Bandwidth Query Report Poll, BQRP) |
| | 0111: Null data packet feedback report poll (NDP Feedback Report Poll, NFRP) |
| | 1000: Sensing |
| | 1001-1111: Reserved |
| Trigger subtype (trigger frame subtype) | A field value of this field is used to indicate subtype information of the trigger frame, and subtypes include but are not limited to the following: |
| | 00: Sensing feedback, which triggers a peer terminal to feed back sensing information |
| | 01: Illumination signal, which triggers the peer terminal to transmit an illumination signal |
| | 10-11: Reserved |
| Feedback type (feedback type) | A field value of the field is used to indicate a type of sensing information that is fed back, and types of sensing information include but are not limited to the following: |
| | 00: Raw data, that is, raw sensing data, where in this case, the sensing terminal collects some raw data and transmits the raw data to the illumination terminal, and the illumination terminal processes and analyzes the raw data to obtain a final sensing result. |
| | 01: Sensing result, that is, a final sensing result, such as a speed, a distance, and an angle |
| | 10: Signal processing result, a signal processing result, where for example, the sensing terminal collects raw data, performs signal processing on the raw data, and transmits a signal processing result, such as a time-Doppler graph and a distance-Doppler graph, to the illumination terminal, and the illumination terminal further analyzes the signal processing result to obtain a final sensing |
| | result. |
| | 11: Reserved |

It should be noted that, in implementations of this application, specific content represented by a bit value may be flexibly set. For example, in a feedback type field, 00 may represent raw data, or may represent other data. This is not limited in implementations of this application.

In another possible implementation, frame type information (indicating whether a trigger frame is a sensing trigger frame) may further be included in frame control information of a frame control field. In this case, the trigger frame type field may be defaulted, or may not be defaulted.

In another possible implementation, frame subtype information (indicating whether the trigger frame is used to trigger a peer terminal to feed back sensing information) may further be included in the frame control information of the frame control field. In this case, the trigger frame subtype field may be defaulted, or may not be defaulted.

Specifically, in S1001, after receiving the first trigger frame, the second node reads a field value of a frame control field, to learn that the first trigger frame is a sensing trigger, and reads a field value of a trigger frame subtype field, to learn that the first trigger frame is used to trigger the second node to feed back the sensing information. In this way, the second node may perform the following S1002 based on the trigger frame.

Currently, the current standard supports one trigger frame to trigger a plurality of STAs to feed back sensing information. To be specific, when an AP transmits a trigger frame once, the plurality of STAs can be triggered at a time to feed back the sensing information. Certainly, the AP may alternatively transmit a trigger frame to each STA, to trigger each STA to feed back sensing information.

S1002: The second node transmits the sensing information to the first node.

The first node receives one or more pieces of sensing information from the one or more second nodes.

It is easy to understand that when there are a plurality of STAs, the plurality of STAs may feed back sensing information in a time division, frequency division, wavelength division, multiple-input multiple-output (multiple-input multiple-output, MIMO) mode, or the like.

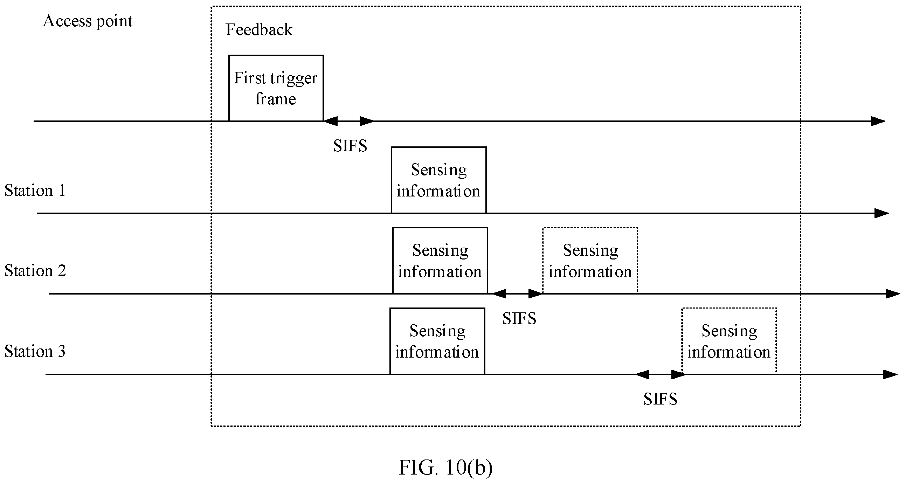

For example, FIG. 10(b) is a time sequence diagram of a procedure in which the AP triggers, by using the first trigger frame, the STA to feed back sensing information.

Specifically, the second node reads a feedback type field of the first trigger frame, to learn a type of sensing information that needs to be fed back, and feeds back sensing information of a corresponding type based on the indication.

S1003: The first node fuses the one or more pieces of sensing information.

In this implementation of this application, fusing the pieces of sensing information can increase a space gain, and improve final sensing precision. For example, when positioning is performed on a same target, the plurality of STAs each transmit positioning information to the AP. The AP comprehensively considers each piece of positioning information, and fuses the positioning information to obtain a final positioning result. Herein, the fusing may refer to various algorithms, for example, weighted summation, and various algorithms for obtaining one value based on a plurality of values. Implementations of this application are not limited thereto.

In this implementation of this application, a specific execution occasion of S1001 is not limited. Optionally, S1001 may be performed after S505, or after the AP transmits the illumination signal, that is, after S503 is performed, S1001 is performed to trigger the STA to feed back the sensing information. In this way, after sensing, the STA may immediately feed back the sensing information, without waiting for the AP to trigger feedback. Alternatively, the AP may perform S1001 on another occasion. This is not limited in implementations of this application.

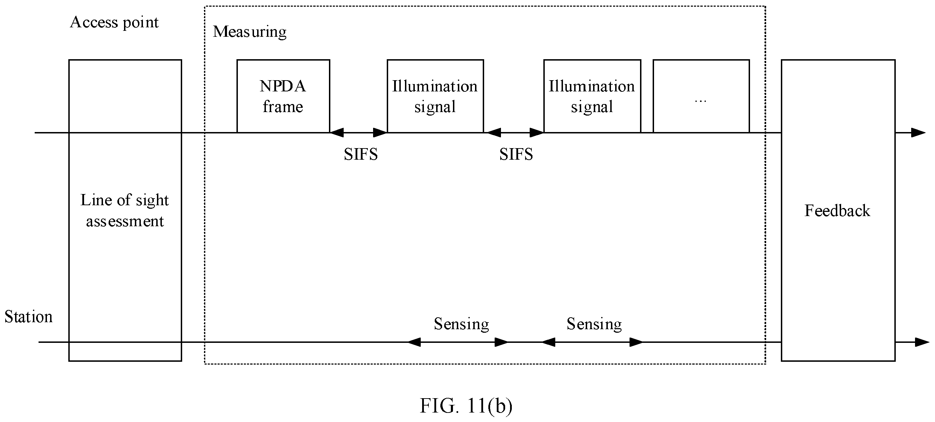

In implementations of this application, refer to FIG. 11(b). A complete sensing procedure includes the LOS assessment procedure shown in FIG. 8, the measuring procedure shown in FIG. 5, and the feedback procedure shown in FIG. 10(a) or FIG. 10(b).

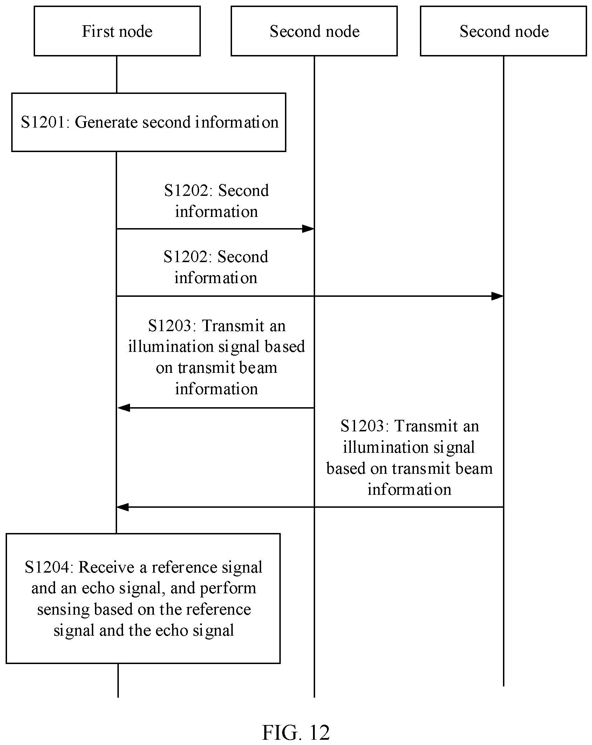

The sensing method in implementations of this application is described in the foregoing mainly by using an example in which the AP is the illumination terminal and the STA is the sensing terminal. The following describes another sensing method in implementations of this application by using an example in which a second node STA is an illumination terminal and a first node AP is a sensing terminal. Specifically, refer to FIG. 12. The sensing method includes the following steps.

S1201: The first node generates second information.

Correspondingly, the second node receives the second information from the first node.

The second information includes transmit beam information of the second node, so that the second node forms a transmit beam based on the second information to transmit an illumination signal. The transmit beam information includes the following: a quantity of transmit beams, a beam angle of the transmit beam used to transmit the illumination signal, an initial scanning angle of the transmit beam used to transmit the illumination signal, and a scanning direction of the transmit beam used to transmit the illumination signal. A beam angle of a transmit beam used to transmit a direct illumination signal is along an LOS between the first node and the second node and points to the first node.

S1202: The first node transmits the second information to the second node.

Correspondingly, the second node receives the second information from the first node.

That the first node transmits the second information to the second node includes: The first node transmits a second trigger frame to the second node, where the second trigger frame includes the second information. Correspondingly, that the second node receives the second information from the first node includes: The second node receives the second trigger frame from the first node, where the second trigger frame includes the second information.

The second trigger frame further includes one or a combination of the following: frame type information and frame subtype information. A frame type includes a sensing type, and the frame subtype includes triggering the second node to transmit the illumination signal.

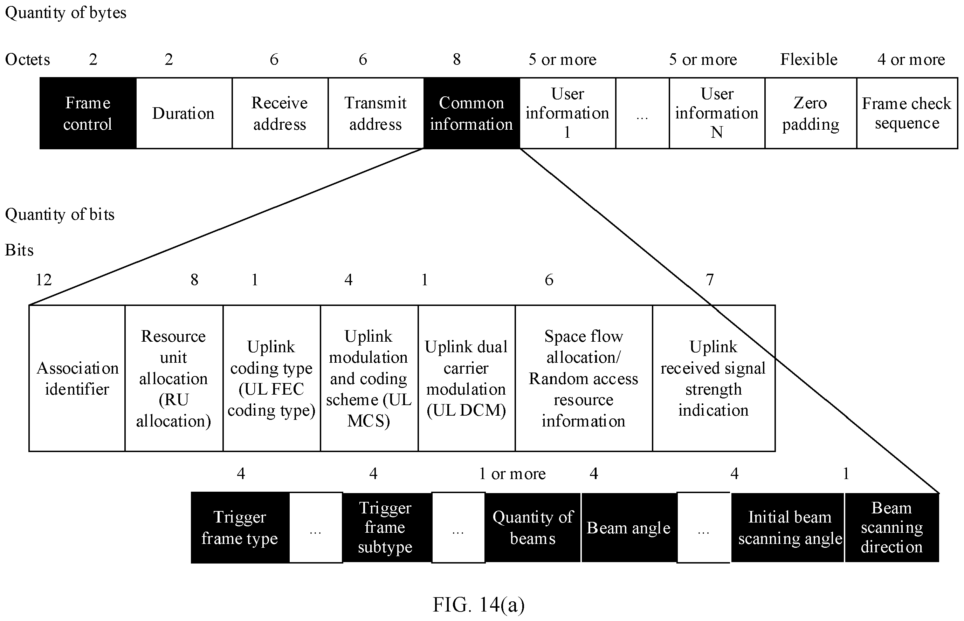

In a possible implementation, a structure of the second trigger frame is shown in FIG. 14(a). A partial structure of the second trigger frame is similar to the foregoing first trigger frame, and similar content is not described herein again. A difference from the first trigger frame lies in that, because the second trigger frame is used to trigger a transmit beam of the second node, the second trigger frame includes fields such as a quantity of beams, a beam angle, an initial beam scanning angle, and a beam scanning direction shown in FIG. 14(a).

Meanings of a part of fields in the second trigger frame are described below with reference to Table 3.

**Table 3**

| Field name | Meaning |
|---|---|
| Trigger type (trigger frame type) | A new trigger frame, that is, a trigger frame used for implementing functions such as detection, sensing, and positioning, is added to the trigger frame type, and is referred to as a sensing trigger in implementations of this application. A field value of this field is used to indicate type information of the trigger frame. |
| | Trigger frame types include but are not limited to the following: |
| | 0000: Basic (Basic) |
| | 0001: BFRP |
| | 0010: MU-BAR |
| | 0011: MU-RTS |
| | 0100: BSRP |
| | 0101: GCR MU-BAR |
| | 0110: BQRP |
| | 0111: Null data packet feedback report poll (NDP Feedback Report Poll, NFRP) |
| | 1000: Sensing |
| | 1001-1111: Reserved |
| Trigger subtype (trigger frame subtype) | A field value of this field is used to indicate subtype information of the trigger frame, and subtypes include but are not limited to the following: |
| | 00: Sensing feedback, which triggers a peer terminal to feed back sensing information |
| | 01: Illumination signal, which triggers the peer terminal to transmit an illumination signal |
| | 10-11: Reserved |
| Beam number (a quantity of transmit beams) | Indication of the quantity of transmit beams generated by the STA |
| Beam angle (an angle of the transmit beam) | Indication of the angle of the transmit beam |
| Beam angle (an initial scanning angle of the transmit beam) | Indication of the initial scanning angle of the transmit beam |
| Beam steering direction (a scanning direction of the transmit beam) | Indication of the scanning direction of the transmit beam |
| | 0: Clockwise, clockwise |
| | 1: Anticlockwise, anticlockwise |

S1203: The second node transmits the illumination signal based on the transmit beam information.

Specifically, after receiving the second trigger frame, the second node reads a trigger frame subtype field in the second trigger frame, to learn that the second trigger frame is used to trigger transmitting of the illumination signal, and reads a beam-related field (for example, the beam quantity and the beam angle), to learn information about the transmit beam used to transmit the illumination signal. The second node forms the transmit beam or transmits the illumination signal omnidirectionally based on the indication of the second trigger frame.

S1204: The first node receives a reference signal and an echo signal, and performs sensing based on the reference signal and the echo signal.

In the technical solution corresponding to FIG. 12, an AP notifies a plurality of STAs to transmit an illumination signal according to a specific beam rule, for example, indicates the STA to adjust a transmit beam, so that the AP performs sensing of dual channels. Specifically, the AP forms a receive beam aligned with the transmit beam, to receive the echo signal and the reference signal by using the receive beam, and performs sensing based on the echo signal and the reference signal.

The transmit beam of the STA may be used in but is not limited to several scenarios shown in Table 4.

**Table 4**

| Scenario | STA channel 1 | STA channel 2 |
|---|---|---|
| a | As shown in FIG. 13(a), the STA transmits omnidirectionally on a single channel, and does not form a transmit beam. | |
| b | In FIG. 13(b), FIG. 13(c), FIG. 13(d), or FIG. 13(e), the STA forms a transmit beam 7 that is along an LOS and points to the AP, to transmit an illumination signal. | In FIG. 13(b), FIG. 13(c), FIG. 13(d), or FIG. 13(e), the STA forms a transmit beam 8 for scanning in space, to transmit the illumination signal. |

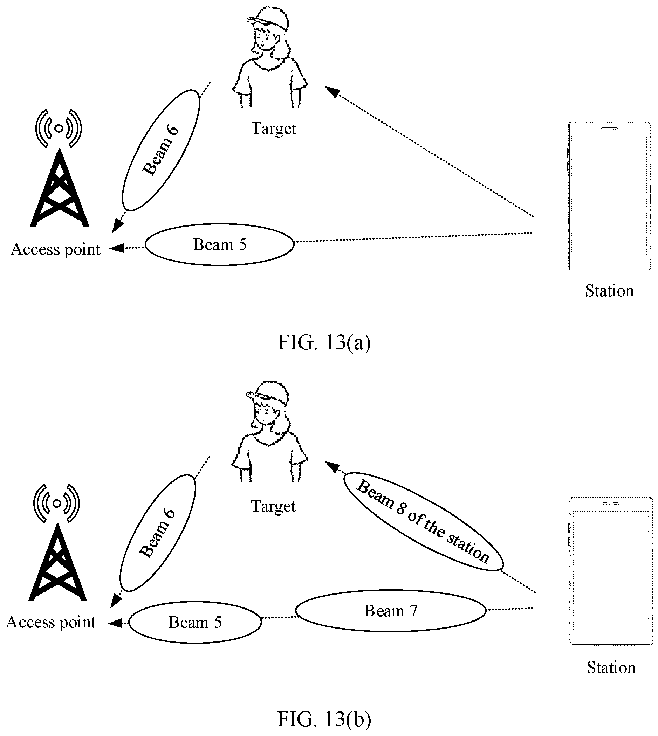

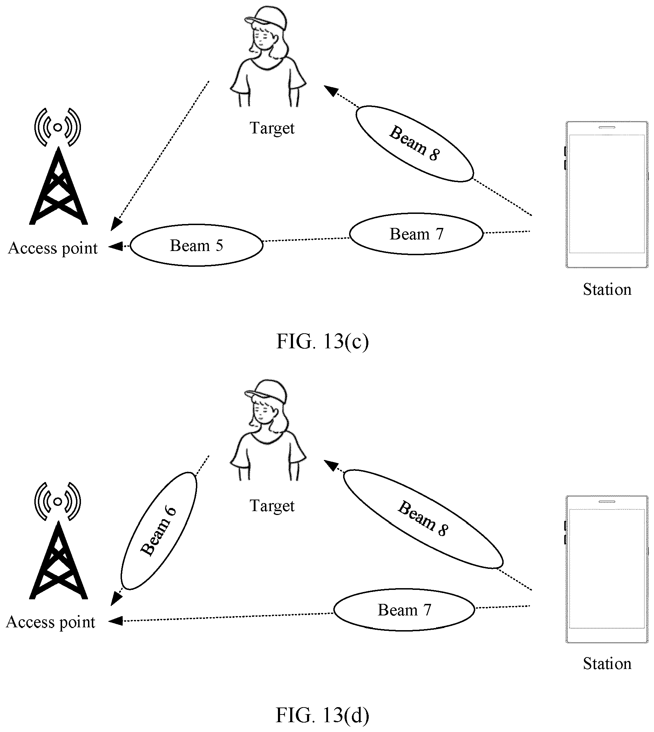

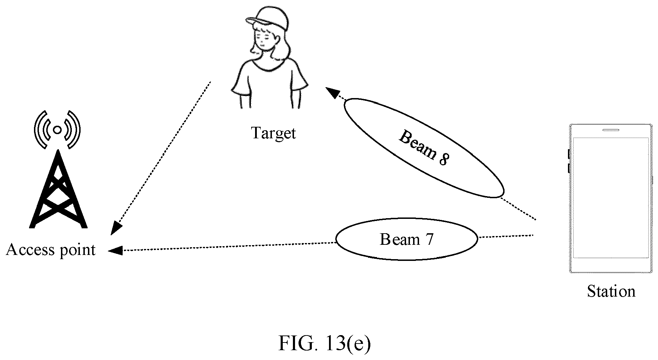

Correspondingly, the receive beam of the AP may be used in but is not limited to several cases in FIG. 13(a), FIG. 13(b), FIG. 13(c), FIG. 13(d), or FIG. 13(e). Implementations of this application are not limited thereto. In FIG. 13(e), the AP receives signals omnidirectionally. These signals include a direct signal from the STA and an echo signal from a target. First, the received signal needs to be demodulated and remodulated, to reconstruct a pure reference signal, and then subsequent processing is performed based on the received signal.

The procedure corresponding to FIG. 12 may be referred to as a measuring procedure. When the STA performs illumination, and the AP performs sensing, refer to FIG. 14(b). A complete sensing procedure includes the measuring procedure shown in FIG. 12 and an LOS assessment procedure. For a specific LOS assessment implementation process, refer to the foregoing description. Details are not described herein again.

According to the sensing method shown in FIG. 12, the first node may indicate, by using the second information carried in the first trigger frame, the second node to form a corresponding transmit beam, so that the second node transmits the illumination signal by using the transmit beam. In this way, the transmit beam is aligned with the receive beam, thereby improving a receive gain of the sensing terminal. In addition, in this solution, a target is not sensed based on a time parameter. Therefore, time synchronization between a receive terminal and a transmit terminal does not need to be performed, thereby reducing implementation complexity of the transmit terminal and the receive terminal.

It should be noted that, in the foregoing procedures, when the first node is an AP, the second node may also be an AP. Alternatively, the first node may be a STA. In this case, the second node may be an AP or a STA.

It may be understood that, to implement the foregoing functions, network elements in implementations of this application include corresponding hardware structures and/or software modules for performing the functions. With reference to units and algorithm steps of the examples described in implementations disclosed in this application, implementations of this application can be implemented in a form of hardware or hardware and computer software. Whether a function is performed by hardware or hardware driven by computer software depends on a particular application and a design constraint of the technical solutions. A person skilled in the art may use different methods to implement the described functions for each particular application, but it should not be considered that the implementation falls beyond the scope of the technical solutions in implementations of this application.

In implementations of this application, the network elements may be divided into function units based on the foregoing method examples. For example, each function unit may be obtained through division based on a corresponding function, or two or more functions may be integrated into one processing unit. The integrated unit may be implemented in a form of hardware, or may be implemented in a form of a software functional unit. It should be noted that, in implementations of this application, division into units is an example, and is merely logical function division. In actual implementation, another division manner may be used.

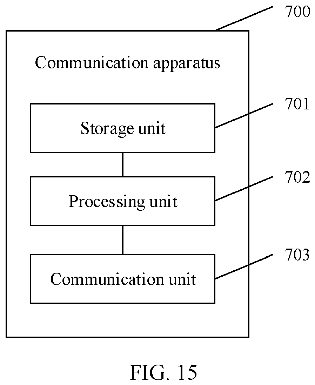

FIG. 15 is a schematic block diagram of a communication apparatus according to an implementation of this application. A communication apparatus 700 may exist in a form of software, or may be a chip that can be used in a device. For example, the communication apparatus may be the foregoing first node, the foregoing second node, or a component (for example, a chip system) having a function of the first node, or a component (for example, a chip system) having a function of the second node. The communication apparatus 700 includes a processing unit 702 and a communication unit 703. Optionally, the communication unit 703 may be further divided into a transmitting unit (not shown in FIG. 15) and a receiving unit (not shown in FIG. 15). The transmitting unit is configured to support the communication apparatus 700 in transmitting information to another network element. The receiving unit is configured to support the communication apparatus 700 in receiving information from the another network element.

Optionally, the communication apparatus 700 may further include a storage unit 701, configured to store program code and data of the communication apparatus 700, where the data may include but is not limited to raw data, intermediate data, or the like.

If the communication apparatus 700 is the first node mentioned above, the processing unit 702 may be configured to support the first node in performing S501 and the like in FIG. 5, and/or is used in another process of the solution described in this specification. The communication unit 703 is configured to support communication between the first node and another network element (for example, the foregoing second node), for example, support the first node in performing S502 and S503 in FIG. 5.

If the communication apparatus 700 is the foregoing second node, the processing unit 702 may be configured to support the second node in performing S505 and the like in FIG. 5, and/or is used in another process of the solution described in this specification. The communication unit 703 is configured to support communication between the second node and another network element (for example, the foregoing first node), for example, support the second node in performing S504 in FIG. 5.

In a possible manner, the processing unit 702 may be a controller, or the processor 201 or the processor 204 shown in FIG. 3. For example, the processing unit 702 may be a central processing unit (Central Processing Unit, CPU), a general-purpose processor, a digital signal processor (Digital Signal Processing, DSP), an application-specific integrated circuit (Application-Specific Integrated Circuit, ASIC), a field programmable gate array (Field Programmable Gate Array, FPGA), another programmable logic device, a transistor logic device, a hardware component, or any combination thereof. The processing unit 702 may implement or execute various example logical blocks, modules, and circuits described with reference to content disclosed in this application. Alternatively, the processing unit 702 may be a combination of processors implementing a computing function, for example, a combination of one or more microprocessors, or a combination of a DSP and a microprocessor. The communication unit 703 may be the transceiver 203 shown in FIG. 3, or may be a transceiver circuit or the like. The storage unit 701 may be the memory 202 shown in FIG. 3.

A person of ordinary skill in the art may understand that all or a part of the foregoing implementations may be implemented by using software, hardware, firmware, or any combination thereof. When the software is used to implement the implementations, all or a part of the implementations may be implemented in a form of a computer program product. The computer program product includes one or more computer instructions. When the computer program instructions are loaded and executed on a computer, the procedure or functions according to implementations of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital video disc (Digital Video Disc, DVD)), a semiconductor medium (for example, a solid-state drive (Solid State Disk, SSD)), or the like.

In the several implementations provided in this application, it should be understood that the disclosed system, apparatus, and method may be implemented in other manners. For example, the described apparatus implementations are merely examples. For example, division into the units is merely logical function division. During actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electrical form or another form.

The units described as separate parts may or may not be physically separate, and parts displayed as units may or may not be physical units, may be located at one position, or may be distributed on a plurality of network devices (for example, terminal devices). A part or all of the units may be selected based on actual requirements to achieve the objectives of the solutions of implementations.

In addition, functional units in implementations of this application may be integrated into one processing unit, or each of the functional units may exist independently, or two or more units are integrated into one unit. The integrated unit may be implemented in a form of hardware, or may be implemented in a form of hardware combined with a software function unit.

Based on the foregoing descriptions of the implementations, a person skilled in the art may clearly understand that this application may be implemented by software in addition to necessary universal hardware or by hardware only. In most circumstances, the former is a example. Based on such an understanding, the technical solutions of this application essentially or the part contributing to the current technology may be implemented in a form of a software product. The computer software product is stored in a readable storage medium, such as a floppy disk, a hard disk or an optical disc of a computer, and includes several instructions for instructing a computer device (which may be a personal computer, a server, a network device, or the like) to perform the methods described in implementations of this application.

The scope of protection is defined by the appended claims.

## Claims

1. A sensing method for sensing a passive target, performed by a second node, **characterized by**:
receiving (S502), by the second node, first information from a first node, wherein the first information comprises transmit beam information of the first node;
receiving (S504), by the second node, a reference signal and an echo signal based on the transmit beam information; and
sensing (S505), by the second node, a motion feature of the passive target based on the reference signal and the echo signal;
wherein
the transmit beam information comprises information of an initial scanning angle of a first transmit beam used to transmit a first illumination signal, and a scanning direction of the first transmit beam used to transmit the first illumination signal, wherein the first illumination signal is reflected by the passive target to form the echo signal;
wherein
the transmit beam information further comprises: a quantity of transmit beams and a beam angle of a second transmit beam used to transmit a second illumination signal, wherein the second illumination signal is sent from the first node to the second node along a line of sight to form the reference signal; and
the receiving, by the second node, an echo signal based on the transmit beam information comprises: receiving, by the second node, the echo signal by using a beam corresponding to the first transmit beam; and
the receiving, by the second node, a reference signal based on the transmit beam information comprises: receiving, by the second node, the reference signal by using a beam corresponding to the second transmit beam, or receiving the reference signal omnidirectionally in space.

2. The sensing method according to claim 1, wherein the receiving, by a second node, first information from a first node comprises: receiving, by the second node, an NDPA frame from the first node, wherein the NDPA frame comprises the first information.

3. The sensing method according to claim 2, wherein the NDPA frame further comprises one or a combination of the following: frame type information, frame subtype information, and association identifier information; and
a frame type comprises a sensing type, and/or a frame subtype comprises a sensing subtype; the frame type information is comprised in frame control information, or is comprised in sounding dialog token information; the frame subtype information is comprised in the frame control information, or is comprised in station information; the association identifier is configured to a preset value, the association identifier is used to indicate that the NDPA frame is used for sensing, and the association identifier is used to indicate beam setting; and the frame subtype is further used to indicate sensing of dual channels, and the dual channels respectively correspond to the reference signal and the echo signal.

4. The sensing method according to any one of claims 1 to 3, wherein the method further comprises:
receiving, by the second node, a first trigger frame from the first node, wherein the first trigger frame is used to trigger the second node to feed back sensing information; and
transmitting, by the second node, the sensing information to the first node, wherein
the first trigger frame comprises feedback type information, the feedback type information is used to indicate a type of the sensing information, and the type of the sensing information comprises one or a combination of the following: raw information, a sensing result of the raw information, and a signal processing result of the raw information.

5. The sensing method according to claim 4, wherein the first trigger frame further comprises one or a combination of the following: subtype information of the first trigger frame and type information of the first trigger frame; a subtype of the first trigger frame comprises triggering the second node to feed back the sensing information; and a type of the first trigger frame comprises sensing.

6. A sensing method for sensing a passive target, performed by a first node, comprising:
generating (S501), by the first node, one or more pieces of first information; and
transmitting (S502), by the first node, the one or more pieces of first information to each of one or more second nodes. **characterized in that**
the first information comprises transmit beam information of the first node to cause each second node to sense a motion feature of the passive target based on the reference signal and the echo signal;
wherein
the transmit beam information comprises an initial scanning angle of a first transmit beam used to transmit a first illumination signal, and a scanning direction of the first transmit beam used to transmit the first illumination signal, wherein the first illumination signal is reflected by the passive target to form the echo signal;
wherein
the transmit beam information further comprises: a quantity of transmit beams and a beam angle of a second transmit beam used to transmit a second illumination signal, wherein the second illumination signal is sent from the first node to the second node along a line of sight to form the reference signal.

7. The sensing method according to claim 6, wherein the transmitting, by the first node, the first information to a second node comprises: transmitting, by the first node, an NDPA frame to the second node, wherein the NDPA frame comprises the first information.

8. The sensing method according to claim 7, wherein the NDPA frame further comprises one or a combination of the following: frame type information, frame subtype information, and association identifier information; and
a frame type comprises a sensing type, and/or a frame subtype comprises a sensing subtype; the frame type information is comprised in frame control information, or is comprised in sounding dialog token information; the frame subtype information is comprised in the frame control information, or is comprised in station information; the association identifier is configured to a preset value, and the association identifier is used to indicate beam setting; and the frame subtype is further used to indicate sensing of dual channels, and the dual channels respectively correspond to the reference signal and the echo signal.

9. The sensing method according to any one of claims 6 to 8, wherein the method further comprises:
transmitting, by the first node, an illumination signal to each of the one or more second nodes;
transmitting, by the first node, a first trigger trigger frame to the one or more second nodes, wherein the first trigger frame is used to trigger the one or more second nodes to feed back sensing information;
receiving, by the first node, one or more pieces of sensing information from the one or more second nodes; and
fusing, by the first node, the one or more pieces of sensing information.

10. The sensing method according to claim 9, wherein the first trigger frame comprises feedback type information, the feedback type information is used to indicate a type of the sensing information, and the type of the sensing information comprises one or a combination of the following: raw information, a sensing result of the raw information, and a signal processing result of the raw information.

11. The sensing method according to claim 9 or 10, wherein the first trigger frame further comprises one or a combination of the following: subtype information of the first trigger frame and type information of the first trigger frame; a subtype of the first trigger frame comprises triggering the second node to feed back the sensing information; and a type of the first trigger frame comprises sensing.

12. A sensing method for sensing a passive target, **characterized by**:
generating (S 1201), by a first node, second information wherein the second information comprises transmit beam information of a second node, and sending the second information to the second node;
receiving (S 1202), by the second node, the second information from the first node;
transmitting (S1203), by the second node, a first illumination signal and a second illumination signal, based on the transmit beam information, wherein the first illumination signal is reflected by the passive target to form an echo signal and wherein the second illumination signal is sent from the second node to the first node along a line of sight to form a reference signal; and
receiving (S1204), by the first node, the echo signal and the reference signal corresponding to the first illumination signal and the second illumination signal respectively, and performing sensing based on the reference signal and the echo signal;
the transmit beam information comprises information of an initial scanning angle of a first transmit beam used to transmit a first illumination signal corresponding to the echo signal, and a scanning direction of the first transmit beam used to transmit the first illumination signal corresponding to the echo signal;
and wherein
the transmit beam information comprises a quantity of transmit beams and a beam angle of a transmit beam used to transmit the second illumination signal;
the receiving, by the first node, an echo signal comprises: receiving, by the first node, the echo signal by using a beam corresponding to the first transmit beam; and
the receiving, by the first node, a reference signal comprises: receiving, by the first node, the reference signal by using a beam corresponding to the second transmit beam, or receiving the reference signal omnidirectionally in space;
wherein the receiving, by a second node, second information from a first node comprises: receiving, by the second node, a second trigger frame from the first node, wherein the second trigger frame comprises the second information;
wherein the second trigger frame further comprises one or a combination of the following: frame type information and frame subtype information; and
a frame type comprises a sensing type, and a frame subtype comprises triggering the second node to transmit the illumination signal.

13. A communication apparatus, configured to perform the steps performed by a second node according to any one of claims 1 to 5, or configured to perform the steps performed by a first node according to any one of claims 6 to 11, or configured to perform the steps performed by a first node according to claim 12.

## Patentansprüche

1. Erfassungsverfahren zum Erfassen eines passiven Ziels, das von einem zweiten Knoten durchgeführt wird, **gekennzeichnet durch**:
Empfangen (S502), durch den zweiten Knoten, erster Informationen von einem ersten Knoten, wobei die ersten Informationen Übertragungsstrahlinformationen des ersten Knotens umfassen;
Empfangen (S504), durch den zweiten Knoten, eines Referenzsignals und eines Echosignals basierend auf den Übertragungsstrahlinformationen; und
Erfassen (S505), durch den zweiten Knoten, eines Bewegungsmerkmals des passiven Ziels basierend auf dem Referenzsignal und dem Echosignal;
wobei
die Übertragungsstrahlinformationen Informationen eines anfänglichen Scanwinkels eines ersten Übertragungsstrahls, der zum Übertragen eines ersten Beleuchtungssignals verwendet wird, und eine Scanrichtung des ersten Übertragungsstrahls, der zum Übertragen des ersten Beleuchtungssignals verwendet wird, umfassen, wobei das erste Beleuchtungssignal von dem passiven Ziel reflektiert wird, um das Echosignal zu bilden;
wobei
die Übertragungsstrahlinformationen ferner Folgendes umfassen: eine Anzahl von Übertragungsstrahlen und einen Strahlwinkel eines zweiten Übertragungsstrahls, der verwendet wird, um ein zweites Beleuchtungssignal zu übertragen, wobei das zweite Beleuchtungssignal von dem ersten Knoten entlang einer Sichtlinie an den zweiten Knoten gesendet wird, um das Referenzsignal zu bilden; und
das Empfangen, durch den zweiten Knoten, eines Echosignals basierend auf den Übertragungsstrahlinformationen Folgendes umfasst: Empfangen, durch den zweiten Knoten, des Echosignals unter Verwendung eines Strahls, der dem ersten Übertragungsstrahl entspricht; und
das Empfangen, durch den zweiten Knoten, eines Referenzsignals basierend auf den Übertragungsstrahlinformationen Folgendes umfasst: Empfangen, durch den zweiten Knoten, des Referenzsignals unter Verwendung eines Strahls, der dem zweiten Übertragungsstrahl entspricht, oder omnidirektionales Empfangen des Referenzsignals im Raum.

2. Erfassungsverfahren nach Anspruch 1, wobei das Empfangen, durch einen zweiten Knoten, erster Informationen von einem ersten Knoten Folgendes umfasst: Empfangen, durch den zweiten Knoten, eines NDPA-Rahmens von dem ersten Knoten, wobei der NDPA-Rahmen die ersten Informationen umfasst.

3. Erfassungsverfahren nach Anspruch 2, wobei der NDPA-Rahmen ferner eines oder eine Kombination der Folgenden umfasst:
Rahmentypinformationen, Rahmenuntertypinformationen und Zuordnungskennungsinformationen; und
ein Rahmentyp einen Erfassungstyp umfasst und/oder ein Rahmenuntertyp einen Erfassungsuntertyp umfasst; die Rahmentypinformationen in Rahmensteuerungsinformationen umfasst sind oder in Sondierungsdialogtokeninformationen umfasst sind; die Rahmenuntertypinformationen in den Rahmensteuerungsinformationen umfasst sind oder in Stationsinformationen umfasst sind; die Zuordnungskennung auf einen voreingestellten Wert konfiguriert ist, die Zuordnungskennung verwendet wird, um anzuzeigen, dass der NDPA-Rahmen zum Erfassen verwendet wird, und die Zuordnungskennung verwendet wird, um eine Strahleinstellung anzuzeigen; und der Rahmenuntertyp ferner verwendet wird, um Erfassen von Doppelkanälen anzuzeigen, und die Doppelkanäle jeweils dem Referenzsignal und dem Echosignal entsprechen.

4. Erfassungsverfahren nach einem der Ansprüche 1 bis 3, wobei das Verfahren ferner Folgendes umfasst:
Empfangen, durch den zweiten Knoten, eines ersten Triggerrahmens von dem ersten Knoten, wobei der erste Triggerrahmen verwendet wird, um zu bewirken, dass der zweite Knoten Erfassungsinformationen zurückmeldet; und
Übertragen, durch den zweiten Knoten, der Erfassungsinformationen an den ersten Knoten, wobei der erste Triggerrahmen Rückmeldungstypinformationen umfasst, die Rückmeldungstypinformationen verwendet werden, um einen Typ der Erfassungsinformationen anzuzeigen, und der Typ der Erfassungsinformationen eines oder eine Kombination der Folgenden umfasst: Rohinformationen, ein Erfassungsergebnis der Rohinformationen und ein Signalverarbeitungsergebnis der Rohinformationen.

5. Erfassungsverfahren nach Anspruch 4, wobei der erste Triggerrahmen ferner eines oder eine Kombination der Folgenden umfasst: Untertypinformationen des ersten Triggerrahmens und Typinformationen des ersten Triggerrahmens; ein Untertyp des ersten Triggerrahmens Bewirken, dass der zweite Knoten die Erfassungsinformationen zurückmeldet, umfasst; und ein Typ des ersten Triggerrahmens Erfassen umfasst.

6. Erfassungsverfahren zum Erfassen eines passiven Ziels, das von einem ersten Knoten durchgeführt wird, umfassend:
Erzeugen (S501), durch den ersten Knoten, einer oder mehrerer erster Informationen; und
Übertragen (S502), durch den ersten Knoten, der einen oder mehreren ersten Informationen an jeden von einem oder mehreren zweiten Knoten, **dadurch gekennzeichnet, dass**
die ersten Informationen Übertragungsstrahlinformationen des ersten Knotens umfassen, um jeden zweiten Knoten dazu zu veranlassen, ein Bewegungsmerkmal des passiven Ziels basierend auf dem Referenzsignal und dem Echosignal zu erfassen;
wobei
die Übertragungsstrahlinformationen einen anfänglichen Scanwinkel eines ersten Übertragungsstrahls, der zum Übertragen eines ersten Beleuchtungssignals verwendet wird, und eine Scanrichtung des ersten Übertragungsstrahls, der zum Übertragen des ersten Beleuchtungssignals verwendet wird, umfassen, wobei das erste Beleuchtungssignal von dem passiven Ziel reflektiert wird, um das Echosignal zu bilden;
wobei
die Übertragungsstrahlinformationen ferner Folgendes umfassen: eine Anzahl von Übertragungsstrahlen und einen Strahlwinkel eines zweiten Übertragungsstrahls, der verwendet wird, um ein zweites Beleuchtungssignal zu übertragen, wobei das zweite Beleuchtungssignal von dem ersten Knoten entlang einer Sichtlinie an den zweiten Knoten gesendet wird, um das Referenzsignal zu bilden.

7. Erfassungsverfahren nach Anspruch 6, wobei das Übertragen, durch den ersten Knoten, der ersten Informationen an einen zweiten Knoten Folgendes umfasst: Übertragen, durch den ersten Knoten, eines NDPA-Rahmens an den zweiten Knoten, wobei der NDPA-Rahmen die ersten Informationen umfasst.

8. Erfassungsverfahren nach Anspruch 7, wobei der NDPA-Rahmen ferner eines oder eine Kombination der Folgenden umfasst:
Rahmentypinformationen, Rahmenuntertypinformationen und Zuordnungskennungsinformationen; und
ein Rahmentyp einen Erfassungstyp umfasst und/oder ein Rahmenuntertyp einen Erfassungsuntertyp umfasst; die Rahmentypinformationen in Rahmensteuerungsinformationen umfasst sind oder in Sondierungsdialogtokeninformationen umfasst sind; die Rahmenuntertypinformationen in den Rahmensteuerungsinformationen umfasst sind oder in Stationsinformationen umfasst sind; die Zuordnungskennung auf einen voreingestellten Wert konfiguriert ist und die Zuordnungskennung verwendet wird, um eine Strahleinstellung anzuzeigen; und der Rahmenuntertyp ferner verwendet wird, um Erfassen von Doppelkanälen anzuzeigen, und die Doppelkanäle jeweils dem Referenzsignal und dem Echosignal entsprechen.

9. Erfassungsverfahren nach einem der Ansprüche 6 bis 8, wobei das Verfahren ferner Folgendes umfasst:
Übertragen, durch den ersten Knoten, eines Beleuchtungssignals an jeden des einen oder der mehreren zweiten Knoten;
Übertragen, durch den ersten Knoten, eines ersten Triggerrahmens an den einen oder die mehreren zweiten Knoten, wobei der erste Triggerrahmen verwendet wird, um zu bewirken, dass der eine oder die mehreren zweiten Knoten Erfassungsinformationen zurückmelden;
Empfangen, durch den ersten Knoten, einer oder mehrerer Erfassungsinformationen von dem einen oder den mehreren zweiten Knoten; und
Zusammenführen, durch den ersten Knoten, der einen oder mehreren Erfassungsinformationen.

10. Erfassungsverfahren nach Anspruch 9, wobei der erste Triggerrahmen Rückmeldungstypinformationen umfasst, die Rückmeldungstypinformationen verwendet werden, um einen Typ der Erfassungsinformationen anzuzeigen, und der Typ der Erfassungsinformationen eines oder eine Kombination der Folgenden umfasst: Rohinformationen, ein Erfassungsergebnis der Rohinformationen und ein Signalverarbeitungsergebnis der Rohinformationen.

11. Erfassungsverfahren nach Anspruch 9 oder 10, wobei der erste Triggerrahmen ferner eines oder eine Kombination der Folgenden umfasst: Untertypinformationen des ersten Triggerrahmens und Typinformationen des ersten Triggerrahmens; ein Untertyp des ersten Triggerrahmens Bewirken, dass der zweite Knoten die Erfassungsinformationen zurückmeldet, umfasst; und ein Typ des ersten Triggerrahmens Erfassen umfasst.

12. Erfassungsverfahren zum Erfassen eines passiven Ziels, **gekennzeichnet durch**:
Erzeugen (S1201), durch einen ersten Knoten, zweiter Informationen, wobei die zweiten Informationen Übertragungsstrahlinformationen eines zweiten Knotens umfassen, und Senden der zweiten Informationen an den zweiten Knoten;
Empfangen (S1202), durch den zweiten Knoten, der zweiten Informationen von dem ersten Knoten;
Übertragen (S1203), durch den zweiten Knoten, eines ersten Beleuchtungssignals und eines zweiten Beleuchtungssignals basierend auf den Übertragungsstrahlinformationen, wobei das erste Beleuchtungssignal von dem passiven Ziel reflektiert wird, um ein Echosignal zu bilden, und wobei das zweite Beleuchtungssignal von dem zweiten Knoten entlang einer Sichtlinie an den ersten Knoten gesendet wird, um ein Referenzsignal zu bilden; und
Empfangen (S1204), durch den ersten Knoten, des Echosignals und des Referenzsignals, die dem ersten Beleuchtungssignal bzw. dem zweiten Beleuchtungssignal entsprechen, und Durchführen von Erfassen basierend auf dem Referenzsignal und dem Echosignal;
die Übertragungsstrahlinformationen Informationen eines anfänglichen Scanwinkels eines ersten Übertragungsstrahls, der zum Übertragen eines ersten Beleuchtungssignals, das dem Echosignal entspricht, verwendet wird, und eine Scanrichtung des ersten Übertragungsstrahls, der zum Senden des ersten Beleuchtungssignals, das dem Echosignal entspricht, verwendet wird, umfassen;
und wobei
die Übertragungsstrahlinformationen eine Anzahl von Übertragungsstrahlen und einen Strahlwinkel eines Übertragungsstrahls, der zum Übertragen des zweiten Beleuchtungssignals verwendet wird, umfassen;
das Empfangen, durch den ersten Knoten, eines Echosignals Folgendes umfasst: Empfangen, durch den ersten Knoten, des Echosignals unter Verwendung eines Strahls, der dem ersten Übertragungsstrahl entspricht; und
das Empfangen, durch den ersten Knoten, eines Referenzsignals Folgendes umfasst: Empfangen, durch den ersten Knoten, des Referenzsignals unter Verwendung eines Strahls, der dem zweiten Übertragungsstrahl entspricht, oder omnidirektionales Empfangen des Referenzsignals im Raum;
wobei das Empfangen, durch einen zweiten Knoten, zweiter Informationen von einem ersten Knoten Folgendes umfasst:
Empfangen, durch den zweiten Knoten, eines zweiten Triggerrahmens von dem ersten Knoten, wobei der zweite Triggerrahmen die zweiten Informationen umfasst;
wobei der zweite Triggerrahmen ferner eines oder eine Kombination der Folgenden umfasst: Rahmentypinformationen und Rahmenuntertypinformationen; und
ein Rahmentyp einen Erfassungstyp umfasst und ein Rahmenuntertyp Bewirken, dass der zweite Knoten das Beleuchtungssignal überträgt, umfasst.

13. Kommunikationsapparatur, die dazu konfiguriert ist, die Schritte, die von einem zweiten Knoten nach einem der Ansprüche 1 bis 5 durchgeführt werden, durchzuführen, oder die dazu konfiguriert ist, die Schritte, die von einem ersten Knoten nach einem der Ansprüche 6 bis 11 durchgeführt werden, durchzuführen, oder die dazu konfiguriert ist, die Schritte, die von einem ersten Knoten nach Anspruch 12 durchgeführt werden, durchzuführen.

## Revendications

1. Procédé de détection pour détecter une cible passive, réalisé par un second noeud, **caractérisé par** :
la réception (S502), par le second noeud, de premières informations provenant d'un premier noeud, dans lequel les premières informations comprennent des informations de faisceau de transmission du premier noeud ;
la réception (S504), par le second noeud, d'un signal de référence et d'un signal d'écho sur la base des informations de faisceau de transmission ; et
la détection (S505), par le second noeud, d'une caractéristique de mouvement de la cible passive sur la base du signal de référence et du signal d'écho ;
dans lequel
les informations de faisceau de transmission comprennent des informations sur un angle de balayage initial d'un premier faisceau de transmission utilisé pour transmettre un premier signal d'éclairage, et une direction de balayage du premier faisceau de transmission utilisé pour transmettre le premier signal d'éclairage, dans lequel le premier signal d'éclairage est réfléchi par la cible passive pour former le signal d'écho ;
dans lequel
les informations de faisceau de transmission comprennent également : une quantité de faisceaux de transmission et un angle de faisceau d'un second faisceau de transmission utilisé pour transmettre un second signal d'éclairage, dans lequel le second signal d'éclairage est envoyé du premier noeud au second noeud le long d'une ligne de visée pour former le signal de référence ; et
la réception, par le second noeud, d'un signal d'écho sur la base des informations de faisceau de transmission comprend : la réception, par le second noeud, du signal d'écho en utilisant un faisceau correspondant au premier faisceau de transmission ; et
la réception, par le second noeud, d'un signal de référence sur la base des informations de faisceau de transmission comprend : la réception, par le second noeud, du signal de référence en utilisant un faisceau correspondant au second faisceau de transmission, ou la réception du signal de référence de manière omnidirectionnelle dans l'espace.

2. Procédé de détection selon la revendication 1, dans lequel la réception, par un second noeud, de premières informations provenant d'un premier noeud comprend : la réception, par le second noeud, d'une trame NDPA provenant du premier noeud, dans lequel la trame NDPA comprend les premières informations.

3. Procédé de détection selon la revendication 2, dans lequel la trame NDPA comprend également l'une ou une combinaison des informations suivantes : des informations de type de trame, des informations de sous-type de trame et des informations d'identifiant d'association ; et
un type de trame comprend un type de détection, et/ou un sous-type de trame comprend un sous-type de détection ; les informations de type de trame sont comprises dans des informations de commande de trame, ou sont comprises dans des informations de jeton de dialogue sonore ; les informations de sous-type de trame sont comprises dans les informations de commande de trame, ou sont comprises dans des informations de station ; l'identifiant d'association est configuré sur une valeur prédéfinie, l'identifiant d'association est utilisé pour indiquer que la trame NDPA est utilisée pour la détection, et l'identifiant d'association est utilisé pour indiquer un réglage de faisceau ; et le sous-type de trame est également utilisé pour indiquer la détection de canaux doubles, et les canaux doubles correspondent respectivement au signal de référence et au signal d'écho.

4. Procédé de détection selon l'une quelconque des revendications 1 à 3, dans lequel le procédé comprend également :
la réception, par le second noeud, d'une première trame de déclenchement provenant du premier noeud, dans lequel la première trame de déclenchement est utilisée pour déclencher le second noeud afin de renvoyer des informations de détection ; et
la transmission, par le second noeud, des informations de détection au premier noeud, dans lequel
la première trame de déclenchement comprend des informations de type rétroaction, les informations de type rétroaction sont utilisées pour indiquer un type des informations de détection, et le type des informations de détection comprend l'un ou une combinaison des éléments suivants : des informations brutes, un résultat de détection des informations brutes, et un résultat de traitement de signal des informations brutes.

5. Procédé de détection selon la revendication 4, dans lequel la première trame de déclenchement comprend également l'un ou une combinaison des éléments suivants : des informations de sous-type de la première trame de déclenchement et des informations de type de la première trame de déclenchement ; un sous-type de la première trame de déclenchement comprend le déclenchement du second noeud pour renvoyer les informations de détection ; et un type de la première trame de déclenchement comprend une détection.

6. Procédé de détection pour détecter une cible passive, réalisé par un premier noeud, comprenant :
la génération (S501), par le premier noeud, d'un ou de plusieurs éléments de premières informations ; et
la transmission (S502), par le premier noeud, des un ou plusieurs éléments de premières informations à chacun d'un ou de plusieurs seconds noeuds, **caractérisé en ce que**
les premières informations comprennent des informations de faisceau de transmission du premier noeud pour amener chaque second noeud à détecter une caractéristique de mouvement de la cible passive sur la base du signal de référence et du signal d'écho ;
dans lequel
les informations de faisceau de transmission comprennent un angle de balayage initial d'un premier faisceau de transmission utilisé pour transmettre un premier signal d'éclairage, et une direction de balayage du premier faisceau de transmission utilisé pour transmettre le premier signal d'éclairage, dans lequel le premier signal d'éclairage est réfléchi par la cible passive pour former le signal d'écho ;
dans lequel
les informations de faisceau de transmission comprennent également : une quantité de faisceaux de transmission et un angle de faisceau d'un second faisceau de transmission utilisé pour transmettre un second signal d'éclairage, dans lequel le second signal d'éclairage est envoyé du premier noeud au second noeud le long d'une ligne de visée pour former le signal de référence.

7. Procédé de détection selon la revendication 6, dans lequel la transmission, par le premier noeud, des premières informations à un second noeud comprend : la transmission, par le premier noeud, d'une trame NDPA au second noeud, dans lequel la trame NDPA comprend les premières informations.

8. Procédé de détection selon la revendication 7, dans lequel la trame NDPA comprend également l'une ou une combinaison des informations suivantes : des informations de type de trame, des informations de sous-type de trame et des informations d'identifiant d'association ; et
un type de trame comprend un type de détection, et/ou un sous-type de trame comprend un sous-type de détection ; les informations de type de trame sont comprises dans des informations de commande de trame, ou sont comprises dans des informations de jeton de dialogue sonore ; les informations de sous-type de trame sont comprises dans les informations de commande de trame, ou sont comprises dans des informations de station ; l'identifiant d'association est configuré sur une valeur prédéfinie, et l'identifiant d'association est utilisé pour indiquer un réglage de faisceau ; et le sous-type de trame est également utilisé pour indiquer la détection de canaux doubles, et les canaux doubles correspondent respectivement au signal de référence et au signal d'écho.

9. Procédé de détection selon l'une quelconque des revendications 6 à 8, dans lequel le procédé comprend également :
la transmission, par le premier noeud, d'un signal d'éclairage à chacun des un ou plusieurs seconds noeuds ;
la transmission, par le premier noeud, d'une première trame de déclenchement de déclenchement aux un ou plusieurs seconds noeuds, dans lequel la première trame de déclenchement est utilisée pour déclencher les un ou plusieurs seconds noeuds afin de renvoyer des informations de détection ;
la réception, par le premier noeud, d'un ou de plusieurs éléments d'informations de détection provenant des un ou plusieurs seconds noeuds ; et
la fusion, par le premier noeud, des un ou plusieurs éléments d'informations de détection.

10. Procédé de détection selon la revendication 9, dans lequel la première trame de déclenchement comprend des informations de type rétroaction, les informations de type rétroaction sont utilisées pour indiquer un type des informations de détection, et le type des informations de détection comprend l'un ou une combinaison des éléments suivants : des informations brutes, un résultat de détection des informations brutes, et un résultat de traitement de signal des informations brutes.

11. Procédé de détection selon la revendication 9 ou 10, dans lequel la première trame de déclenchement comprend également l'un ou une combinaison des éléments suivants : des informations de sous-type de la première trame de déclenchement et des informations de type de la première trame de déclenchement ; un sous-type de la première trame de déclenchement comprend le déclenchement du second noeud pour renvoyer les informations de détection ; et un type de la première trame de déclenchement comprend une détection.

12. Procédé de détection pour détecter une cible passive, **caractérisé par** :
la génération (S1201), par un premier noeud, de secondes informations dans lequel les secondes informations comprennent des informations de faisceau de transmission d'un second noeud, et l'envoi des secondes informations au second noeud ;
la réception (S1202), par le second noeud, des secondes informations provenant du premier noeud ;
la transmission (S1203), par le second noeud, d'un premier signal d'éclairage et d'un second signal d'éclairage, sur la base des informations de faisceau de transmission, dans lequel le premier signal d'éclairage est réfléchi par la cible passive pour former un signal d'écho et dans lequel le second signal d'éclairage est envoyé du second noeud au premier noeud le long d'une ligne de visée pour former un signal de référence ; et
la réception (S1204), par le premier noeud, du signal d'écho et du signal de référence correspondant respectivement au premier signal d'éclairage et au second signal d'éclairage, et la réalisation d'une détection sur la base du signal de référence et du signal d'écho ;
les informations de faisceau de transmission comprennent des informations sur un angle de balayage initial d'un premier faisceau de transmission utilisé pour transmettre un premier signal d'éclairage correspondant au signal d'écho, et une direction de balayage du premier faisceau de transmission utilisé pour transmettre le premier signal d'éclairage correspondant au signal d'écho ;
et dans lequel
les informations de faisceau de transmission comprennent une quantité de faisceaux de transmission et un angle de faisceau d'un faisceau de transmission utilisé pour transmettre le second signal d'éclairage ;
la réception, par le premier noeud, d'un signal d'écho comprend :
la réception, par le premier noeud, du signal d'écho en utilisant un faisceau correspondant au premier faisceau de transmission ; et
la réception, par le premier noeud, d'un signal de référence comprend : la réception, par le premier noeud, du signal de référence en utilisant un faisceau correspondant au second faisceau de transmission, ou la réception du signal de référence de manière omnidirectionnelle dans l'espace ;
dans lequel la réception, par un second noeud, de secondes informations provenant d'un premier noeud comprend : la réception, par le second noeud, d'une seconde trame de déclenchement provenant du premier noeud, dans lequel la seconde trame de déclenchement comprend les secondes informations ;
dans lequel la seconde trame de déclenchement comprend également l'une ou une combinaison des informations suivantes : des informations de type de trame et des informations de sous-type de trame ; et
un type de trame comprend un type de détection, et un sous-type de trame comprend le déclenchement du second noeud pour transmettre le signal d'éclairage.

13. Appareil de communication, configuré pour réaliser les étapes réalisées par un second noeud selon l'une quelconque des revendications 1 à 5, ou configuré pour réaliser les étapes réalisées par un premier noeud selon l'une quelconque des revendications 6 à 11, ou configuré pour réaliser les étapes réalisées par un premier noeud selon la revendication 12.
